# FASCICULE DE BREVET EUROPEEN

(11) **EP 2 976 400 B1**
(45) Date de publication et mention de la délivrance du brevet: **24.07.2024**
(21) Numéro de dépôt: 14713413.4
(22) Date de dépôt: 19.03.2014
(51) Int. Cl.: C09D 175/02, C08G 18/78, C08G 18/79, C08G 18/72, C08G 18/38

(54) **COMPOSITION D'ALLOPHANATE**
COMPOSITION CONTAINING ALLOPHANATES
ZUSAMMENSETZUNG, ENTHALTEND ALLOPHANATE

(30) Priorité: 19.03.2013 FR 1352465
(43) Date de publication de la demande: 27.01.2016
(73) Titulaire: Vencorex France, 69800 Saint-Priest (FR)
(72) Inventeur: KLUCKER, Rolf, F-69300 Caluire et Cuire (FR); BERNARD, Jean-Marie, F-69440 Saint Laurent d'Agny (FR)
(74) Mandataire: Lavoix
(86) Numéro de dépôt international: PCT/EP2014/055537
(87) Numéro de publication internationale: WO 2014/147142

(56) Documents cités:
- WO-A1-2010/067005
- WO-A1-2012/161774
- WO-A2-2011/126562
- DE-A1- 102008 024 352
- DE-A1- 102009 007 228

## Description

La présente demande décrit une composition de préparation d'un revêtement comprenant (a) au moins un composé comprenant au moins deux fonctions amines secondaires et (b) une composante isocyanate comprenant au moins un allophanate et au moins un isocyanate polyfonctionnel, et son utilisation pour la préparation d'un revêtement. L'invention est définie dans les revendications annexées.

En particulier, la présente demande décrit une composition de préparation d'un revêtement comprenant
(a) au moins un composé choisi parmi
   ▪ un composé de formule (Q) 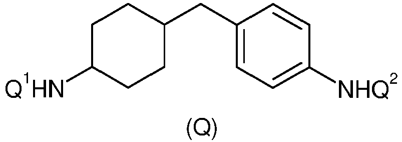
   ▪ un composé comprenant au moins deux fonctions amines secondaires et obtenu par réaction (a1) d'au mois un composé comportant au moins une fonction amine primaire et (a2) d'au moins un composé comportant une double liaison (C=C) située en α d'une fonction ester (C(O)OR) ou d'au moins un composé comportant une double liaison (C=C) située en α d'une fonction nitrile (CN) ou de leurs mélanges ;
   ▪ un mélange d'un composé de formule (Q) et d'un composé comprenant au moins deux fonctions amines secondaires et issu des étapes (a1) et (a2) ;
(b) une composante isocyanate de fonctionnalité NCO allant de 1,5 à 4,5 ; de préférence allant de 1,6 à 3,5 ; plus préférentiellement allant de 1,7 à 3 ; et comprenant (b1) au moins un allophanate de formule (I) et de fonctionnalité NCO égale à 2 +/- 0,1 et (b2) au moins un isocyanate polyfonctionnel ; et dans laquelle le rapport en masse entre la quantité d'allophanate (b1) et la quantité d'isocyanate polyfonctionnel (b2) va de 1/99 à 50/50.

L'invention concerne également l'utilisation de cette composition pour la préparation d'un revêtement dont l'hydrophobicité est améliorée ainsi que pour améliorer la durée de vie en pot (propriété de pot life) d'une formulation pour peinture ou pour vernis ou pour améliorer le temps d'ouverture d'un film ou d'une couche résultant de l'application de cette composition.

L'invention concerne également l'utilisation de cette composition pour la préparation d'une composition de revêtement de faible viscosité par rapport aux compositions de l'état de la technique.

On connaît des allophanates destinés à des compositions de revêtement. WO-2010/067005 décrit un procédé de préparation d'allophanate ainsi qu'un allophanate et une composition comprenant l'allophanate et destinée à la préparation de compositions de revêtement, en particulier de peinture.

On connaît l'utilisation de résines, par exemple de résines polyuréthanes pour la préparation de revêtement. Ces résines polyuréthanes connues peuvent présenter des problèmes de réactivité ou des problèmes de vitesse de réaction.

Les résines de préparation de revêtement de l'état de la technique entraînent également des problèmes liés à la présence de composés organiques volatils, en particulier lors de la mise en oeuvre de résines de faible masse moléculaire.

Les résines de l'état de la technique peuvent également présenter des problèmes de viscosité.

Les compositions de préparation de revêtement de l'état de la technique présentent également des problèmes de sensibilité à l'humidité ambiante lors de leur mise en oeuvre. L'humidité ambiante peut conduire à un séchage accéléré de la couche de revêtement préparé.

Par ailleurs, les compositions de l'état de la technique peuvent conduire à des revêtements présentant des problèmes de flexibilité.

De telles compositions peuvent également conduire à des revêtements dont les couches appliquées successivement ou dont les couches se recouvrant partiellement présentent des surépaisseurs. Ces surépaisseurs peuvent donc constituer des défauts du revêtement préparé.

Les compositions de l'état de la technique peuvent également présenter des durées de vie en pot insuffisante qui peuvent les rendre inutilisables. Dans de tels cas, le doublement de la viscosité des compositions de l'état de la technique est trop rapide et conduit à des problèmes de mise en oeuvre de ces compositions.

Les compositions de l'état de la technique ne permettent pas toujours de préparer des revêtements dont l'hydrophobicité est satisfaisante alors qu'il s'agit d'une propriété importante.

De plus, les compositions de l'état de la technique comprennent généralement d'importantes quantités de solvant afin d'abaisser ou de maîtriser leur viscosité. Ces solvants sont habituellement des composés organiques volatils (COV) ou bien des sources de tels COV.

DE 10 2008 024352 divulgue une composition de revêtement comprenant un prépolymère polyisocyanate; un mélange de polyamines; et d'autres polyisocyanates.

WO 2011/126562 décrit des polyols et des fonctionnalités de 4.

Il existe donc un besoin de compositions à base d'isocyanate possédant des propriétés améliorées.

L'invention permet donc d'apporter une solution à tout ou partie des problèmes liés aux compositions de préparation de revêtement de l'état de la technique.

Ainsi, la présente invention fournit une composition de préparation d'un revêtement particulièrement avantageuse dans le domaine du recouvrement de sol.

L'invention fournit également une composition de préparation d'un revêtement particulièrement avantageuse dans le domaine de l'automobile, en particulier pour la préparation de peinture ou de vernis, notamment des applications de réparation de peinture ou de vernis.

L'invention fournit une composition de préparation de revêtement comprenant
(a) au moins un composé (a) dont la masse moléculaire va de 400 à 6 500 g.mol⁻¹ ou un composé (a) dont la fonctionnalité NH va de 2 à 30, choisi parmi
   ▪ un composé de formule (Q) 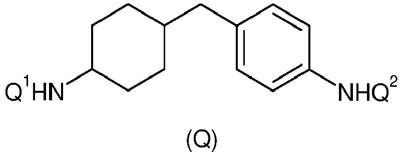 dans laquelle Q¹ et Q², identiques ou différents, représentent un groupement alkyle linéaire ou ramifié, comprenant de 1 à 20 atomes de carbone, en particulier de 2 à 12 atomes de carbone ou de 2 à 6 atomes de carbone ou au moins 3 atomes de carbone, notamment choisis parmi méthyle, éthyle, propyle, isopropyle, butyle, isobutyle, tertiobutyle, les différents isomères linéaires ou ramifiés des pentyle, hexyle, heptyle, octyle, nonyle et décyle ;
   ▪ un composé comprenant au moins deux fonctions amines secondaires et obtenu par réaction
      (a1) d'au moins un composé comportant au moins une fonction amine primaire et
      (a2) d'au moins un composé comportant une double liaison (C=C) située en α d'une fonction ester (C(O)OR) ou d'au moins un composé comportant une double liaison (C=C) située en α d'une fonction nitrile (CN) ou de leurs mélanges ;
      ledit composé obtenu par réaction des étapes (a1) et (a2) étant
         - un composé de formule (II-a) : 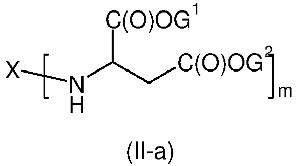
   dans laquelle
   m représente un nombre entier égal ou supérieur à 2, notamment un entier allant de 2 à 30, par exemple un entier allant de 2 à 10 ou de 2 à 6 ;
   X représente un radical organique de valence m et obtenu par réaction d'un composé (a1) choisi parmi éthylènediamine, 1,2-diaminopropane, 1,4-diaminobutane, 2-méthyle-1,5-diaminopentane, 1,6-diaminohexane, 2,5-diamino-2,5-diméthylehexane, 2,2,4-triméthyle-1,6-diaminohexane, 2,4,4-trimethyl-1,6-diaminohexane, 1,11-diaminoundecane, 1,12-diaminododecane, 1-amino-3,3,5-triméthyle-5-aminométhylecyclohexane, 2,4-hexahydrotolylènediamine, 2,6-hexahydrotolylènediamine, 2,4'-diaminodicyclohexylemethane, 4,4'-diaminodicyclohexylemethane, 3,3'-diméthyle-4,4'-diamino-dicyclohexylemethane, 2,4,4'-triamino-5-méthyledicyclohexylemethane et les polyétherpolyamines substituées par au moins un groupe amino-aliphatique primaire dont la masse moléculaire moyenne va de 148 à 6 000 g/mol ;
   G¹ et G², identiques ou différents, représentent indépendamment un radical organique, un radical hydrocarboné ou un radical hydrocarboné inertes vis-à-vis des fonctions isocyanates dans les conditions de préparation de la composition ; ou
      - un composé de formule (II-b) : 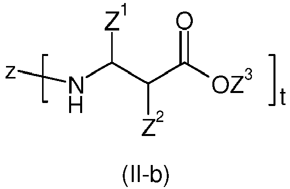
   dans laquelle
   t représente un nombre entier égal ou supérieur à 2, notamment un entier allant de 2 à 30, par exemple un entier allant de 2 à 10 ou de 2 à 6 ;
   Z représente un radical de valence égale à m et choisi parmi un radical organique, un radical hydrocarboné, un radical hydrocarboné en C₂-C₅₀ ; résultant de l'élimination des fonctions amines primaires du composé (a1) ;
   Z¹ représente indépendamment hydrogène ou un groupe C₁-C₄-alkyle, en particulier méthyle ;
   Z² représente indépendamment hydrogène ou un groupe C₁-C₄-alkyle, en particulier méthyle ;
   Z³ représente indépendamment un radical organique, un radical hydrocarboné ou un radical hydrocarboné inerte vis-à-vis des fonctions isocyanates dans les conditions de préparation de la composition ; ou
      - un mélange d'au moins un composé de formule (II-a) et d'au moins un composé de formule (II-b)

      ▪ un mélange d'un composé de formule (Q) et d'un composé comprenant au moins deux fonctions amines secondaires et issu des étapes (a1) et (a2) ;
(b) une composante isocyanate de fonctionnalité NCO allant de de 1,6 à 3,5 ; préférentiellement allant de 1,7 à 3 ; et comprenant
   (b1) au moins un allophanate de formule (I) et de fonctionnalité NCO égale à 2 +/- 0,1 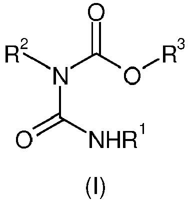 dans laquelle
      - R¹ et R², identiques ou différents, représentent un groupe hydrocarboné, comprenant une fonction isocyanate dérivée ou non-dérivée ;
      - R³ représente le reste résultant de la réaction de la fonction isocyanate avec l'hydrogène de la fonction OH d'un alcool comprenant une fonction éther ou polyéther et choisi parmi un silanol ; un monoalcool aliphatique à chaîne linéaire en C₁₂-C₂₀ ; un monoalcool aliphatique à chaîne ramifiée en C₁₂-C₂₀ ou un alcool de formule

         T¹-[O-CH(T²)-CH₂]ₙ-OH

         dans laquelle T¹ représente un groupe alkyle linéaire en C₁-C₂₀; un groupe alkyle ramifié en C₁-C₂₀; un groupement de formule T³-CO-CH₃ dans laquelle T³ représente un groupe alkyle linéaire en C₁-C₂₀ ou un groupe alkyle ramifié en C₁-C₂₀ ; T² représente H ; un groupe alkyle, de préférence un groupe alkyle en C₁-C₈, notamment méthyle ; un groupement éther, notamment un groupement de formule -CH₂OT⁴ dans laquelle T⁴ représente une chaîne hydrocarbonée, notamment une chaîne polyalkylène ou une chaîne polyoxyalkylène, de préférence une chaîne polyoxyéthylène ; n représente un nombre entier, de préférence un nombre entier allant de 1 à 50 ; et
      (b2) au moins un isocyanate polyfonctionnel ; et
      (b3) dans laquelle le rapport en masse entre la quantité d'allophanate (b1) et la quantité d'isocyanate polyfonctionnel (b2) va de 1/99 à 50/50,

   la composition comprenant un mélange d'allophanates (b1) comprenant au moins 25% en masse, avantageusement au moins 33% en masse, de préférence au moins 50% en masse d'au moins un monoallophanate (b1),
   la fonction isocyanate dérivée de l'allophanate (b1) étant différente d'une fonction isocyanurate et est choisie parmi les fonctions carbamate, urée, biuret, uréthanne, uretinedione, acylurée, isocyanate masquée, allophanate.

Selon l'invention, pour le composé (a2) comportant une double liaison (C=C) située en α d'une fonction nitrile (CN), cette fonction peut donc également être un groupement cyano et peut être représentée par la formule C ≡ N.

De manière avantageuse selon l'invention, la composition est telle que le ratio molaire [b/a] défini par [nombre de fonctions NCO de la composante (b)] / [nombre de fonctions NH du composé (a)] va de 0,7 à 1,3 ; 0,9 à 1,2 ; de 1 à 1,2 ; de 0,8 à 1,2 ; de 0,9 à 1,2 ; de 0,8 à 1,1 ; de 0,9 à 1,1 ; de 1 à 1,1 ou est égal à 1.

De manière préférée pour la composition de l'invention,
▪ le composé (a1) comprend au moins une fonction amine primaire et au moins un groupement choisi parmi une chaîne hydrocarbonée ; une chaîne hydrocarbonée comprenant au moins un hétéroatome choisi parmi O, S, N ; une chaîne hydrocarbonée comprenant au moins une fonction choisie parmi une fonction ester, éther ou carbonate ; une chaîne hydrocarbonée comprenant au moins un hétéroatome choisi parmi O, S, N et au moins une fonction choisie parmi une fonction ester, éther ou carbonate ; la chaîne hydrocarbonée étant de préférence en C₁-C₂₀, linéaire, ramifiée ou cyclique ; ou
▪ pour laquelle le composé (a1) est un composé aminoester comportant au moins une fonction amine primaire ; ou
▪ pour laquelle le composé (a2) comprend une double liaison (C=C) susceptible de réagir par addition de Michael avec la fonction amine primaire du composé (a1) et qui est choisi parmi les dérivés esters comprenant une double liaison (C=C) tels que le maléate de diméthyle, le maléate de diéthyle, les maléates ou fumarates de dibutyle, le fumarate de diéthyle, le fumarate de diméthyle, le crotonate d'éthyle, le crotonate de butyle, le crotonate de 2-éthylhexyle, l'acrylate de méthyle, l'acrylate d'éthyle, l'acrylate de butyle, l'acrylate de 2-éthyle-hexyle, le méthacrylate d'éthyle, le méthacrylate de butyle, le méthacrylate de 2-éthylhexyle, les hydroxy alkyles acrylates, les hydroxy alkyles méthacrylates, l'itaconate de diéthyle, le méthyle-cyclohexene-1-carboxylate ; ou
▪ pour laquelle le composé (a2) est un composé choisi parmi un composé comportant des doubles liaisons (C=C) situées en α de fonctions esters (C(O)OR) tels qu'un polyacrylate d'alkyles, un triacrylate d'alkyles, un diacrylate d'alkyles, un polyméthacrylate d'alkyles, un triméthacrylate d'alkyles, un dimethacrylate d'alkyles, un polymaléate d'alkyles, un trimaléate d'alkyles, un dimaléate d'alkyles, comme le diacrylate d'hexane diol, le diméthacrylate d'hexane diol, le diacrylate de 2-éthyle hexanediol, le diméthacrylate de 2-éthyle hexanediol, le diacrylate de cyclohexane diol, le diméthacrylate de cyclohexane diol, le triacrylate de triméthylolpropane, le méthacrylate de triméthylolpropane, le triacrylate de triméthylolpropane comprenant des fonctions oligoéthylène glycols, le méthacrylate de triméthylolpropane comprenant des fonctions oligoétylène glycols, le tétraméthacrylate de pentaérythritol, le tétraacrylate de pentaérythritol, le méthacrylate de pentaérythritol, l'itaconate d'hexanediol, le diacrylate de polyéthylène glycol de masse moléculaire moyenne en nombre (Mₙ) comprise entre 200 et 2 000, le méthacrylate de polyéthylène glycol de masse moléculaire moyenne en nombre (Mₙ) comprise entre 200 et 2 000, les dérivés acrylates ou méthacrylates de polycaprolactone diol ou triol ou tetraol de masse moléculaire moyenne en nombre (Mₙ) comprise entre 200 et 2 000, les dérivés acrylates ou méthacrylates des polyols à fonctions carbonates ; ou
▪ combine ces définitions des composés (a1) et (a2).

De manière avantageuse, le composé (a1) peut également être choisi parmi propylamine, diisopropylamine, cyclohexylamine, glycinate d'éthyle, aspartate de diméthyle, aminocaproate de méthyle ou d'éthyle, aminoundécanoate d'éthyle, phenylalaninate de propyle, lysinate d'éthyle, aminoisobutyrate d'éthyle, 1-methoxy-2-propanamine, phenylethylamine, 4-methoxybenzylamine, 4,11-dioxatetradeca-1,14-diamine, aminomethyl thiophene, les éther-amines choisies parmi les amines RN-CAS-9046-10-0, RN-CAS-72088-96-1, RN-CAS-27417-83-0, RN-CAS-103659-01-4 ou leurs mélanges. De manière également avantageuse, le composé (a1) peut être choisi parmi ethylenediamine, 1,4-diaminobutane, 2-methyl-1,5-diaminopentane, 1,6-diaminohexane, 2,2,4-trimethyl-1,6-diaminohexane, 2,4,4-trimethyl-1,6-diaminohexane, 1-amino-3,3,5-trimethyl-5-aminomethyl-cyclohexane, 4,4'-diamino-dicyclohexylmethane, 3,3-dimethyl-4,4'-diamino-dicyclohexylmethane ou leurs mélanges.

De manière avantageuse, la préparation d'acides aminés polyfonctionnels à fonction amine primaire, en tant que composé (a1) selon l'invention, peut comprendre la réaction d'estérification des acides aminés en présence d'un catalyseur acide et d'un polyol comportant au moins une fonction hydroxyle.

Le composé (a1) peut également être obtenu par estérification d'un acide aminé par un polyol, par exemple un diol ou un triol.

De manière également avantageuse, on peut mettre en oeuvre en tant que composé (a1) selon l'invention, un sel d'aminoester comportant une fonction amine primaire tel qu'un chlorhydrate d'aminoester à fonction amine primaire, qui, par réaction avec un composé (a2) selon l'invention, en présence d'un solvant polaire et d'une base capable de neutraliser le sel d'aminoester, peut permettre d'obtenir un composé aminoester à fonction amine secondaire (a). De préférence, la base peut être choisie parmi les carbonates de métal alcalin ou alcalino-terreux ou parmi les amines tertiaires.

De manière avantageuse, les différents types de composés (a1) peuvent également être mélangés.

De manière avantageuse, pour le composé (a2), les fonctions maléate et acrylate peuvent être portées par le même composé. Par exemple, le composé (a2) peut être le maléate de di hydroxyéthyle acrylate.

De manière également avantageuse, le composé (a2) peut être issu de matières biosourcées.

De manière préférée selon l'invention, le composé (a) est un composé de formule (II-a) : 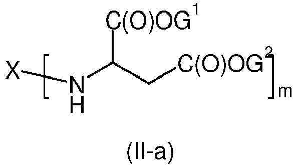 dans laquelle
- m représente un nombre entier égal ou supérieur à 2, notamment un entier allant de 2 à 30, par exemple un entier allant de 2 à 10 ou de 2 à 6 ;
- X représente un radical de valence égale à m et choisi parmi un radical organique, un radical hydrocarboné, un radical hydrocarboné en C₂-C₅₀ ; résultant de l'élimination des fonctions amines primaires du composé (a1) ;
- G¹ et G², identiques ou différents, représentent indépendamment un radical organique, un radical hydrocarboné ou un radical hydrocarboné inerte vis-à-vis des fonctions isocyanates dans les conditions de préparation de la composition.

De manière également préférée selon l'invention, le composé (a) est un composé de formule (II-b) : 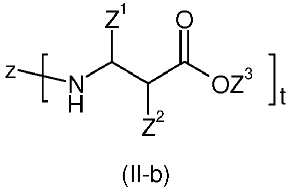 dans laquelle
- t représente un nombre entier égal ou supérieur à 2, notamment un entier allant de 2 à 30, par exemple un entier allant de 2 à 10 ou de 2 à 6 ;
- Z représente un radical de valence égale à m et choisi parmi un radical organique, un radical hydrocarboné, un radical hydrocarboné en C₂-C₅₀ ; résultant de l'élimination des fonctions amines primaires du composé (a1) ;
- Z¹ représente indépendamment hydrogène ou un groupe C₁-C₄-alkyle, en particulier méthyle ;
- Z² représente indépendamment hydrogène ou un groupe C₁-C₄-alkyle, en particulier méthyle ;
- Z³ représente indépendamment un radical organique, un radical hydrocarboné ou un radical hydrocarboné inerte vis-à-vis des fonctions isocyanates dans les conditions de préparation de la composition.

De manière également préférée, l'invention met en oeuvre un mélange d'au moins un composé de formule (II-a) et d'au moins un composé de formule (II-b).

De préférence, pour le composé de formule (II) et dans les conditions de préparation de la composition selon l'invention, G¹, G², Z¹, Z² et Z³ sont inertes vis-à-vis des fonctions isocyanates, en particulier vis-à-vis des fonctions isocyanates de la composante isocyanate (b). Ainsi et de manière préférée, G¹, G², Z¹, Z² et Z³ ne comprennent pas de groupement comprenant des atomes d'hydrogène réactifs de type Zerewitinoff.

Les composés de formule (II) selon l'invention sont généralement préparés de manière connue de l'homme du métier. Des températures allant de 0 à 100°C conviennent en général.

Selon l'invention, le composé (a) peut être un composé de formule (II) dans laquelle X représente un radical divalent comprenant jusqu'à 40 atomes de carbone, de préférence un radical choisi parmi les radicaux de formules (X¹) à (X⁶)

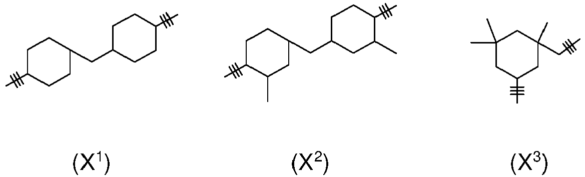

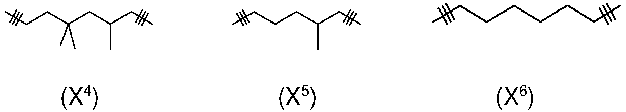

Selon l'invention, les groupements sont liés de manière covalente aux autres groupements ou atomes constituants la molécule par l'intermédiaire de la liaison représentée par le symbole.

Le composé (a) peut également être un composé de formule (II) dans laquelle X représente un radical organique de valence m et obtenu par réaction d'un composé (a1) choisi parmi 1,4-diaminobutane, 2-méthyle-1,5-diaminopentane, 1,6-diaminohexane, 2,2,4-triméthyle-1,6-diaminohexane, 2,4,4-triméthyle-1,6-diaminohexane, 1-amino-3,3,5-triméthyle-5-aminomethylcyclohexane, 4,4'-diaminodicyclohexylmethane, 3,3'-diméthyle-4,4'-diaminodicyclohexylmethane.

Le composé (a) peut également être un acide aminé pouvant être obtenu de diverses sources. Ces acides aminés peuvent être obtenus par hydrolyse de protéines animales ou de protéines végétales. Ils peuvent également être obtenus par fermentation de produits d'origine végétale tels que le glycérol, le glucose ou d'autres composés saccharidiques. Des méthodes de préparation d'esters d'aminoacides sont connues. On peut citer les méthodes décrites dans les ouvrages suivants : Protective groups in Organic synthesis de Greene and Wuts aux éditions Wiley intersciences, The practice of peptide synthesis 1994 Bodanszky M and A Springer Verlag Heidelberg, The peptides Vol 1-5 Gross and Meienhofer Academic Press New York.

Selon l'invention, la composition comprend avantageusement
- un composé (a) dont la masse moléculaire va de 400 à 6 500 g.mol⁻¹, de préférence de 400 à 800 g.mol⁻¹ ; ou
- un composé (a) dont la fonctionnalité NH va de 2 à 30, de préférence de 2 à 6 ; ou
- un composé (a) de formule (II) selon les revendications 4 ou 5 dans laquelle X représente un radical organique de valence m et obtenu par réaction d'un composé (a1) choisi parmi éthylènediamine, 1,2-diaminopropane, 1,4-diaminobutane, 2-méthyle-1,5-diaminopentane, 1,6-diaminohexane, 2,5-diamino-2,5-diméthylehexane, 2,2,4-triméthyle-1,6-diaminohexane, 2,4,4-triméthyle-1,6-diaminohexane, 1,11-diaminoundecane, 1,12-diaminododecane, 1-amino-3,3,5-triméthyle-5-aminométhylecyclohexane, 2,4-hexahydrotolylenediamine, 2,6-hexahydrotolylenediamine, 2,4'-diaminodicyclohexylemethane, 4,4'-diaminodicyclohexylemethane, 3,3'-diméthyle-4,4'-diamino-dicyclohexylemethane, 2,4,4'-triamino-5-méthyledicyclohexylemethane et les polyétherpolyamines substituées par au moins un groupe amino-aliphatique primaire dont la masse moléculaire moyenne va de 148 à 6 000 g/mol.

Selon l'invention, la composition comprend au moins un allophanate de formule (I) dont la fonctionnalité NCO est égale à 2 +/- 0,1. La fonctionnalité NCO de l'allophanate de formule (I) selon l'invention peut donc présenter une certaine variation autour de la valeur 2, cette variation est généralement d'environ +/- 5%.

Les avantages de la composition selon l'invention sont généralement également accessibles avec un allophanate de formule (I) et de fonctionnalité NCO égale à 2 +/- 0,3.

De manière avantageuse, la composition selon l'invention comprend une composante isocyanate (b) pour laquelle le composé (b1) est un composé de formule (I) dans laquelle R¹ et R², identiques ou différents, représentent un groupe comprenant une fonction isocyanate dérivée ou non-dérivée et choisi parmi un groupe hydrocarboné aliphatique, cycloaliphatique, hétérocyclique ou aromatique, de préférence un groupe hydrocarboné aliphatique comprenant une fonction isocyanate dérivée ou non-dérivée.

De manière également avantageuse, la fonction isocyanate dérivée de l'allophanate (b1) est différente d'une fonction isocyanurate et est choisie parmi les fonctions carbamate, urée, biuret, uréthanne, uretinedione, acylurée, isocyanate masquée, allophanate.

Selon l'invention, l'allophanate (b1) peut être un homo-allophanate, R¹ et R² étant identiques, ou bien l'allophanate (b1) peut être un allophanate mixte, R¹ et R² étant différents.

La composition selon l'invention comprend un mélange d'allophanates (b1). Le mélange d'allophanates (b1) comprend au moins 25% en masse, avantageusement au moins 33% en masse, de préférence au moins 50% en masse d'au moins un monoallophanate (b1). Le mélange d'allophanates peut également comprendre au moins un allophanate choisi parmi un bis-allophanate, un tris-allophanate, un ou plusieurs allophanates lourds, ainsi que de manière minoritaire, du carbamate d'isocyanate de formule R²NCO et d'alcool de formule R³OH ou du carbamate d'isocyanate de formule R¹NCO et d'alcool de formule R³OH ou du mélange de carbamates d'isocyanates de formule R²NCO et de formule R¹NCO et d'alcool de formule R³OH.

De manière avantageuse, la composition selon l'invention comprend une composante isocyanate (b) pour laquelle le composé (b2) est un isocyanate polyfonctionnel tricondensat, de préférence un isocyanate polyfonctionnel tricondensat de formule (III) : 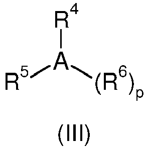 dans laquelle
- R⁴, R⁵ et R⁶ représentent indépendamment un groupement hydrocarboné ou un groupement hétérocarboné aliphatique, cycloaliphatique, hétérocyclique ou aromatique, comprenant au moins une fonction isocyanate dérivée ou non-dérivée ;
- p représente 0, 1 ou 2 ;
- A représente un groupement choisi parmi un groupe isocyanurate, un groupe imino oxadiazine dione, un groupe oxadiazine trione, un groupement biuret respectivement de formules (A¹) à (A⁴) ou un groupement de formule (A⁵) 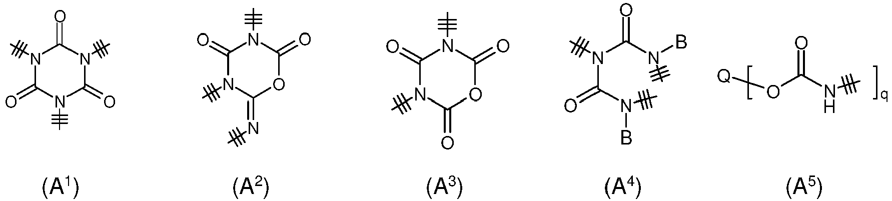 dans lesquelles
- B représente indépendamment un atome d'hydrogène ; un groupe hydrocarboné ; un groupe hydrocarboné en C₁-C₂₀; un groupe hétérocarboné comprenant au moins un hétéroatome choisi parmi O, N, S, Si ; un groupe hétérocarboné en C₁-C₂₀ comprenant au moins un hétéroatome choisi parmi O, N, S, Si ;
- q représente 3 ou 4 ;
- Q représente un groupement choisi parmi un groupe hydrocarboné, un groupement alcoyle, un groupement hétérocarboné, un groupement hétérocarboné aliphatique, cycloaliphatique, hétérocyclique ou aromatique, comprenant une fonction isocyanate dérivée ou non-dérivée, un groupement dérivé du pentaérythritol, un groupement dérivé du triméthylolpropane.

De manière avantageuse, l'isocyanate polyfonctionnel (b2) est un polyisocyanate isocyanurate.

Selon l'invention, l'isocyanate polyfonctionnel (b2) peut être
- un polyisocyanate isocyanurate issu d'une réaction de tricondensation pour laquelle le taux de transformation du ou des monomères isocyanates, identiques ou différents, en polyisocyanate polyfonctionnel tricondensat est supérieur à 8% ou supérieur à 10% ou supérieur à 15% ; ou
- un polyisocyanate isocyanurate comprenant entre 1 et 99% en poids de biuret ou entre 2 et 75% en poids de biuret ; ou
- un polyisocyanate isocyanurate issu d'une réaction de tricondensation pour laquelle le taux de transformation du ou des monomères isocyanates, identiques ou différents, en polyisocyanate polyfonctionnel tricondensat est supérieur à 8% ou supérieur à 10% ou supérieur à 15% et comprenant entre 1 et 99% en poids de biuret ou entre 2 et 75% en poids de biuret.

De manière particulièrement avantageuse, l'invention fournit également une composition de préparation de revêtement comprenant (a) le composé comprenant au moins deux fonctions amines secondaires, (b) la composante isocyanate et (c) un solvant.

De nombreux solvants (c) peuvent convenir. De manière préférée, le solvant de la composition selon l'invention est choisi parmi les solvants ayant un point d'ébullition inférieur à 250°C à pression atmosphérique tels que les esters, les éthers, les composés aromatiques ou leurs mélanges. On peut ainsi citer à titre d'exemples le n-butyle acétate, l'acétate de méthoxy propyle, les xylènes, le diméthyle éther du propylène glycol

La composition selon l'invention comprenant un solvant est particulièrement avantageuse pour une mise en oeuvre par pulvérisation, en particulier pour la préparation de revêtement de peinture ou de vernis pour l'automobile. De manière encore plus avantageuse, la composition selon l'invention comprenant un solvant est mise en oeuvre pour la réparation de revêtement de peinture ou de vernis pour automobile.

La composition selon l'invention comprenant un solvant est notamment avantageuse pour ce qui concerne sa viscosité, en particulier pour éviter les problèmes d'obstruction de buses d'application. Cette composition est également avantageuse pour sa durée de vie en pot améliorée ainsi que pour la durée d'ouverture du film de peinture ou de vernis préparé.

L'invention fournit également l'utilisation d'une composition selon l'invention pour la préparation d'un revêtement ou pour la préparation d'un revêtement réticulable ou pour la préparation d'un revêtement réticulable par irradiation UV ou la préparation d'un revêtement dont l'hydrophobicité est améliorée.

L'invention concerne également l'utilisation d'une composition selon l'invention pour améliorer la durée de vie en pot (propriété de pot life) d'une formulation pour peinture ou pour vernis.

Selon l'invention, la durée de vie en pot est le temps pendant lequel il est possible d'utiliser, à température ambiante, une composition selon l'invention dont on vient de mélanger les composants, sans altération des propriétés.

L'invention concerne également l'utilisation d'une composition selon l'invention pour améliorer le temps d'ouverture d'un film ou d'une couche résultant de l'application de la composition.

De manière avantageuse, la composition selon l'invention permet de préparer un revêtement sec à la poussière en un temps permettant le recouvrement et le raccordement efficaces de deux couches appliquées de manière totalement ou partiellement superposée.

De manière également avantageuse, la composition selon l'invention peut être mise en oeuvre pour permettre le nivellement ou l'absence de surépaisseur formée lors de l'application de deux couches de revêtement.

Les différents aspects et les propriétés avantageuses de l'invention peuvent être illustrés par les exemples qui suivent. Ces exemples ne constituent pas de limitation de la portée de cette invention.

### Exemples

### Matériels

Teraspartic^{®} 277 (Pflaumer Brothers, Inc.) est une résine aliphatique cyclique fonctionnalisée avec des amines secondaires, de type ester d'acide polyaspartique, identique au Desmophen^{™} NH-1420 (Bayer MaterialScience). Les caractéristiques principales de ce produit sont :
▪ fonctionnalité NH : 5,4%,
▪ viscosité dynamique (à 25°C) : 900 - 2000 mPa.s,
▪ densité : 1,05.

Teraspartic^{®} 292 (Pflaumer Brothers, Inc.) est une résine aliphatique cyclique fonctionnalisée avec des amines secondaires, de type ester d'acide polyaspartique, identique au Desmophen^{™} NH-1520 (Bayer MateriaIScience). Les caractéristiques principales de ce produit sont :
▪ fonctionnalité NH : 5.1%,
▪ viscosité dynamique (à 25°C) : 800 - 2000 mPa.s,
▪ densité : 1,05.

Amicure^{®} IC-221 (Air Products) est une résine cyclique fonctionnalisée avec des amines secondaires. Les caractéristiques principales de ce produit sont :
▪ poids équivalent par moles de fonctions NH : 376 g/Mol,
▪ viscosité dynamique (à 25°C) : 100 - 800 mPa.s,
▪ densité à (21°C) : 1,06.

Amicure^{®} IC-321 (Air Products) est une résine cyclique fonctionnalisée avec des amines secondaires. Les caractéristiques principales de ce produit sont :
▪ poids équivalent par moles de fonctions NH : 379 g/Mol,
▪ viscosité dynamique (à 25°C) : 100 - 800 mPa.s,
▪ densité (à 21°C) : 1,05.

Tolonate^{™} HDT (Vencorex) est un polyisocyanate de type isocyanurate préparé à partir d'hexaméthylènediisocyanate. Les caractéristiques principales de ce produit sont :
▪ fonctionnalité NCO : 22 - 23 %,
▪ viscosité dynamique (à 25°C) : 2000 - 2800 mPa.s,
▪ densité (à 25°C) : 1,13 g/cm³.

Tolonate^{™} HDT-LV (Vencorex) est un polyisocyanate de type isocyanurate préparé à partir d'hexaméthylènediisocyanate. Les caractéristiques principales de ce produit sont :
▪ fonctionnalité NCO : 22 - 24 %,
▪ viscosité dynamique (à 25°C) : 900 - 1500 mPa.s,
▪ densité (à 25°C) : 1,16 g/cm³.

Tolonate^{™} HDT-LV2 (Vencorex) est un polyisocyanate de type isocyanurate préparé à partir d'hexaméthylènediisocyanate. Les caractéristiques principales de ce produit sont :
▪ fonctionnalité NCO : 22 - 24 %,
▪ viscosité dynamique (à 25°C) : 450 - 750 mPa.s,
▪ densité (à 25°C) : 1,13 g/cm³.

Tolonate^{™} HDB-LV (Vencorex) est un polyisocyanate de type biuret préparé à partir d'hexaméthylènediisocyanate. Les caractéristiques principales de ce produit sont :
▪ fonctionnalité NCO : 23%,
▪ viscosité dynamique (à 25°C) : 600 mPa.s,
▪ densité (à 25°C) : 1,13 g/cm³.

Tolonate^{™} X-FLO 100 (Vencorex) est un polyisocyanate de type allophanate et préparé à partir d'hexaméthylènediisocyanate. Les caractéristiques principales de ce produit sont :
▪ fonctionnalité NCO : 12,6 %,
▪ viscosité dynamique (à 25°C) : 130 mPa.s,
▪ densité (à 20°C) : 1,04 g/cm³.

Desmodur^{®} N 3200 (Bayer MaterialScience) est un polyisocyanate de type biuret et préparé à partir d'hexaméthylènediisocyanate. Les caractéristiques principales de ce produit sont :
▪ fonctionnalité NCO : 22,0 - 23,0 %,
▪ viscosité dynamique (à 23°C) : 1500 - 3500 mPa.s,
▪ densité (à 20°C) : 1,13 g/cm³.

Desmodur^{®} N 3900 (Bayer MaterialScience) est un polyisocyanate de type iminooxadiazindione (trimer asymétrique) et préparé à partir d'hexaméthylènediisocyanate. Les caractéristiques principales de ce produit sont :
▪ fonctionnalité NCO : 23,0 - 24,0 %,
▪ viscosité dynamique (à 23°C) : 630 - 830 mPa.s,
▪ densité : 1,15 g/cm³.

### Préparations

Les préparations (A) basées sur des résines de type ester polyaspartique Teraspartic^{®} 277 et Teraspartic^{®} 292, seuls ou mélangées dans différents ratios, ont été préparées et réticulées avec des polyisocyanates (B) Tolonate^{™} HDT-LV2 et Tolonate^{™} X-FLO 100, seul ou mélangés dans différents ratios.

Les ratios des mélanges de (A) et (B) ont été fixés par les ratios molaires des fonctionnalités NH et NCO, respectivement comprises dans (A) et (B), de sorte que le ratio NCO/NH soit constant. Dans les exemples cités, le ratio NCO/NH est égal à 1.

### Préparations 1 : mélanges de résines polvaspartiaues (A) utilisés:

| Composition (A) | Quantité de Teraspartic^{®} 277 (% en masse) | Quantité de Teraspartic^{®} 292 (% en masse) | Quantité de Amicure^{®} IC-221 (% en masse) | Quantité de Amicure^{®} IC-321 (% en masse) |
|---|---|---|---|---|
| A1 | 100 | 0 | - | - |
| A2 | 75 | 25 | - | - |
| A3 | 50 | 50 | - | - |
| A4 | 25 | 75 | - | - |
| A5 | 0 | 100 | - | - |
| A6 | - | - | 100 | - |
| A7 | - | - | - | 100 |

### Préparations 2 : mélanges de polvisocvanates (B) utilisés :

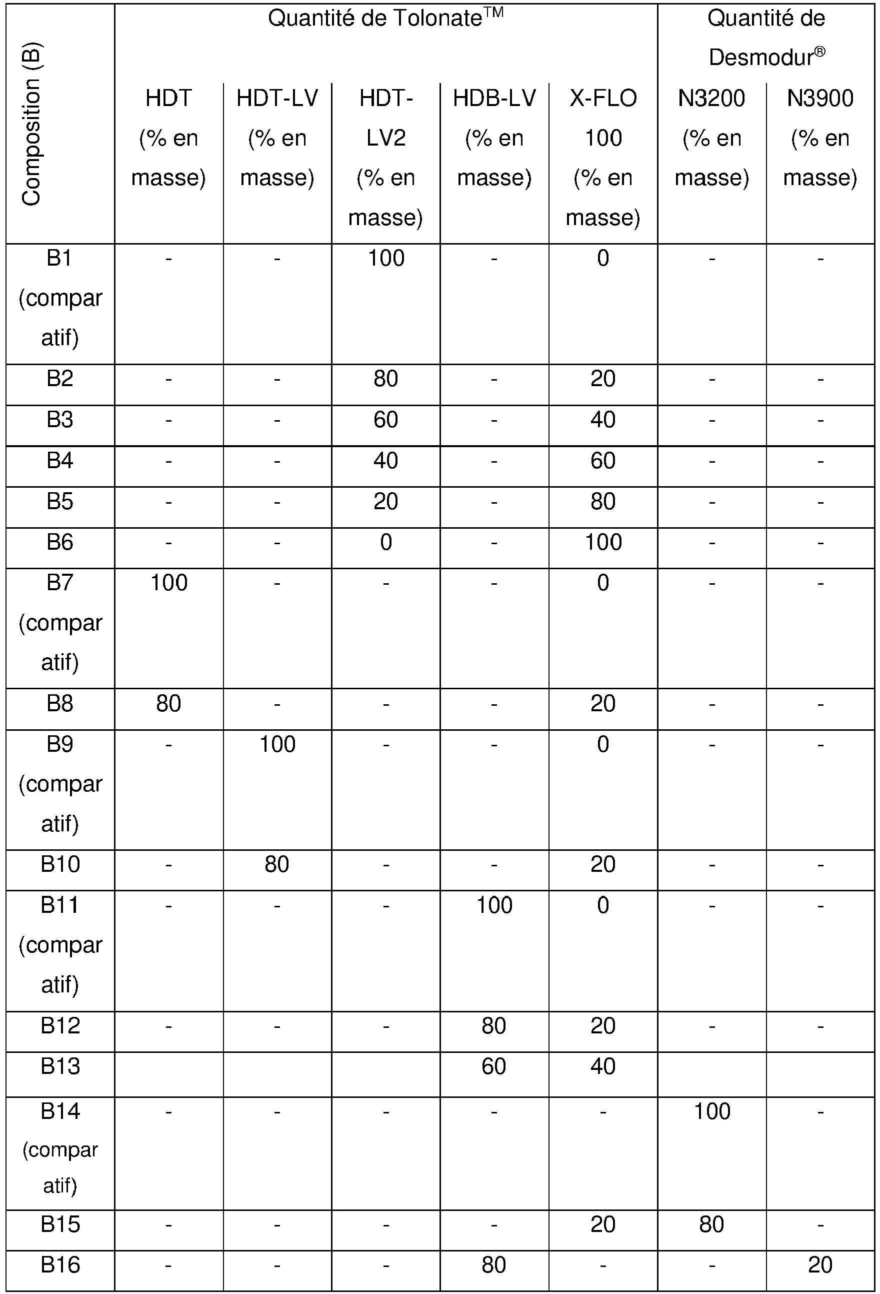

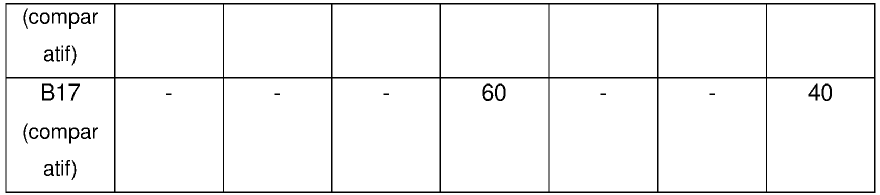

### Résultats

### Exemple 1 : évolution de la viscosité dynamique de la formulation en fonction de la proportion de Tolonate^{™} X-FLO 100 dans le mélange de polvisocvanates utilisé :

La viscosité dynamique des formulations (A)+(B) a été mesurée immédiatement (dans un délai de moins d'une minute) après le mélange des parties (A) et (B), pour des ratios de mélange respectant un ratio molaire entre les fonctionnalités NCO et NH égal à 1. Les mesures de viscosité dynamique ont été réalisées au moyen d'un viscosimètre Rheomat RM300 à taux de cisaillement constant (150 s⁻¹).

| Composition (A) | Composition (B) | Viscosité dynamique mesurée (en mPa.s) | Viscosité dynamique modélisée (en mPa.s) |
|---|---|---|---|
| A1 | B1 (comp.) | 1161,3 | 1139,7 |
| A1 | B2 | 969,1 | 971,2 |
| A1 | B3 | 788,0 | 808,4 |
| A1 | B4 | 627,3 | 650,9 |
| A1 | B5 | 480,7 | 498,5 |
| A1 | B6 | 362,1 | 351,0 |
| A2 | B1 (comp.) | 1259,4 | 1275,3 |
| A2 | B2 | 1140,0 | 1082,3 |
| A2 | B3 | 934,6 | 895,9 |
| A2 | B4 | 691,5 | 715,5 |
| A2 | B5 | 566,9 | 541,0 |
| A3 | B1 (comp.) | 1297,4 | 1436,4 |
| A3 | B2 | 1303,8 | 1218,8 |
| A3 | B3 | 971,0 | 1008,4 |
| A3 | B4 | 857,8 | 805,0 |
| A3 | B5 | 585,5 | 608,1 |
| A4 | B1 (comp.) | 1611,8 | 1623,8 |
| A4 | B2 | 1484,7 | 1381,2 |
| A4 | B3 | 1110,7 | 1146,8 |
| A4 | B4 | 878,1 | 920,0 |
| A4 | B5 | 687,0 | 700,6 |
| A5 | B1 (comp.) | 1822,1 | 1838,2 |
| A5 | B2 | 1596,5 | 1570,4 |

Les résultats ont été modélisés avec une fonction polynomiale de deuxième degré avec les fractions volumétriques des différentes composantes comme variables.

Les résultats montrent une diminution de la viscosité dynamique avec la croissance de la proportion de Tolonate^{™} X-FLO 100 dans la composition (B) utilisée.

### Exemple 2 : évolution de la durée de vie en pot de la formulation en fonction de la proportion de Tolonate^{™} X-FLO 100 dans le mélange des polyisocyanates utilisé :

La durée de vie en pot des formulations (A)+(B) est déterminée par l'évaluation du temps nécessaire pour doubler la viscosité dynamique de la formulation. La durée de vie en pot a été évaluée pour des ratios de mélange respectant un ratio molaire entre les fonctionnalités NCO et NH égal à 1. Les mesures de viscosité dynamique ont été réalisées au moyen d'un viscosimètre Rheomat RM300 à taux de cisaillement constant (150 s⁻¹).

| Composition (A) | Composition (B) | Durée de vie en pot mesuré (en secondes) | Gain de durée de vie en pot par rapport à l'utilisation de B1 (% en temps) |
|---|---|---|---|
| A1 | B1 (comp.) | 280 | - |
| A1 | B2 | 361 | 28,9 |
| A1 | B3 | 441 | 57,5 |
| A1 | B4 | 552 | 97,1 |
| A1 | B5 | 670 | 139,3 |
| A2 | B1 (comp.) | 331 | - |
| A2 | B2 | 430 | 29,9 |
| A2 | B3 | 541 | 63,4 |
| A2 | B4 | 691 | 108,8 |
| A2 | B5 | 876 | 164,7 |
| A3 | B1 (comp.) | 422 | - |
| A3 | B2 | 530 | 25,6 |
| A3 | B3 | 730 | 73,0 |
| A3 | B4 | 841 | 99,3 |
| A3 | B5 | 1250 | 196,2 |
| A4 | B1 (comp.) | 750 | - |
| A4 | B2 | 900 | 20,0 |
| A4 | B3 | 1100 | 46,7 |
| A4 | B4 | 1340 | 78,7 |
| A4 | B5 | 2071 | 176,1 |
| A5 | B1 (comp.) | 3120 | - |
| A5 | B2 | 4120 | 32,1 |

La durée de vie en pot des formulations (A)+(B) est déterminée par l'évaluation du temps nécessaire pour doubler la viscosité dynamique de la formulation. La durée de vie en pot a été évaluée pour des ratios de mélange respectant un ratio molaire entre les fonctionnalités NCO et NH égal à 1. Les mesures de viscosité dynamique ont été réalisées au moyen d'un rhéomètre Anton Paar MCR-302 en mode d'oscillation dans une gamme de fréquence allant de 0.1 à 40 s⁻¹.

| Composition (A) | Composition (B) | Durée de vie en pot mesuré (en secondes) | Gain de durée de vie en pot par rapport à l'utilisation de B1 (% en temps) |
|---|---|---|---|
| A6 | B7 (comp.) | 636 | - |
| A6 | B8 | 854 | 34,3 |
| A6 | B9 (comp.) | 510 | - |
| A6 | B10 | 595 | 16,7 |
| A6 | B1 (comp.) | 568 | - |
| A6 | B2 | 626 | 10,2 |
| A6 | B11 (comp.) | 604 | - |
| A6 | B12 | 686 | 13,6 |
| A7 | B11 (comp.) | 850 | - |
| A7 | B12 | 1280 | 50,6 |

Les résultats montrent une augmentation de la durée de vie en pot avec l'augmentation de la proportion de Tolonate^{™} X-FLO 100 dans la préparation (B) utilisée.

### Exemple 3 : évolution du temps d'ouverture et du temps de séchage des films appliqués en fonction de la proportion de Tolonate^{™} X-FLO 100 dans le mélange des polvisocvanates utilisé :

Le temps de séchage des films issus des formulations (A)+(B) appliqués sur un substrat de type verre est évalué selon la norme EN ISO 9117-5 pour des ratios de mélange respectant un ratio molaire entre les fonctionnalités NCO et NH égal à 1.

| Composition (A) | Composition (B) | Temps de séchage T1 : sec hors poussière mesuré (en minutes) | Gain en temps de séchage T1 par rapport à l'utilisation de B1 (% en temps) |
|---|---|---|---|
| A1 | B1 (comp.) | 18 | - |
| A1 | B2 | 25 | 38,9 |
| A1 | B3 | 30 | 66,7 |
| A1 | B4 | 45 | 150,0 |
| A1 | B5 | 80 | 344,4 |
| A2 | B1 (comp.) | 35 | - |
| A2 | B2 | 41 | 17,1 |
| A2 | B3 | 47 | 34,3 |
| A2 | B4 | 73 | 108,6 |
| A2 | B5 | 180 | 414,3 |
| A3 | B1 (comp.) | 70 | - |
| A3 | B2 | 90 | 28,6 |
| A3 | B3 | 140 | 100,0 |
| A3 | B4 | 230 | 228,6 |
| A3 | B5 | 540 | 671,4 |
| A4 | B1 (comp.) | 320 | - |
| A4 | B2 | 450 | 40,6 |

Le temps de séchage des films issus des formulations (A)+(B) appliqués sur un substrat de type verre est évalué selon la norme ASTM D-5895 avec un enregistreur mécanique de temps de séchage de type BK pour des ratios de mélange respectant un ratio molaire entre les fonctionnalités NCO et NH égal à 1.

| Composition (A) | Composition (B) | Temps de séchage étape II : sec au touché (en minutes) | Gain en temps de séchage étape II par rapport à l'utilisation de B1 ou B11 respectives (% en temps) |
|---|---|---|---|
| A6 | B1 (comp.) | 51.0 | - |
| A6 | B2 | 59.5 | 16.7% |
| A6 | B3 | 73.5 | 44.1% |
| A7 | B1 (comp.) | 155 | - |
| A7 | B2 | 180 | 16.1% |
| A7 | B3 | 394 | 119% |
| A6 | B11 (comp.) | 33.0 | - |
| A6 | B12 | 39.0 | 18.2% |
| A6 | B13 | 45.0 | 36.4% |
| A7 | B11 (comp.) | 85.0 | - |
| A7 | B12 | 97.0 | 14.1% |
| A7 | B13 | 119 | 40.0% |

Les résultats montrent une augmentation du temps de séchage avec l'augmentation de la proportion de Tolonate^{™} X-FLO 100 dans la préparation (B) utilisée.

Le temps d'ouverture de film étant lié aux mêmes mécanismes de réaction que le temps de séchage, en l'absence de substance volatile liée, il augmente également en conséquence.

### Exemple 4 : évolution de l'angle de contact avec de l'eau déminéralisée en fonction de la proportion de Tolonate^{™} X-FLO 100 dans le mélange des polyisocyanates utilisé :

L'hydrophobicité de la surface des films issus des formulations (A)+(B) appliqués sur un substrat est évaluée par mesure de l'angle de contact avec de l'eau déminéralisée pour des ratios de mélange respectant un ratio molaire entre les fonctionnalités NCO et NH égal à 1.

| Composition (A) | Composition (B) | Angle de contact mesuré pour l'eau |
|---|---|---|
| A1 | B1 (comp.) | 68.8° |
| A1 | B2 | 74.1° |
| A1 | B3 | 76.7° |
| A3 | B1 (comp.) | 61,9° |
| A3 | B2 | 65,5° |
| A3 | B3 | 69,8° |
| A5 | B1 (comp.) | 71.9° |
| A5 | B2 | 73.2° |
| A5 | B3 | 74.6° |
| A6 | B1 (comp.) | 72.2° |
| A6 | B2 | 73.1° |
| A6 | B3 | 74.2° |
| A7 | B1 (comp.) | 71.2° |
| A7 | B2 | 73.1° |
| A7 | B3 | 73.1° |

Les résultats montrent une augmentation de l'angle de contact avec l'augmentation de la proportion de Tolonate^{™} X-FLO 100 dans la préparation (B) utilisée. Cette augmentation reflète une augmentation du caractère hydrophobe de la surface du film.

### Exemple 5 : Compatibilité entre des polyisocyanates avec des formulations (A) en fonction de la proportion de Tolonate^{™} X-FLO 100 dans le mélange de polyisocyanates utilisé :

La compatibilité entre résines et polyisocyanates est donnée par l'opacité du produit (A) + (B) réticulé évalué pour masses coulées. L'échelle d'évaluation est la suivante : 0 : limpide, 1 : voilé, 2 : laiteux, 3 : translucide, 4 : opaque.

| Composition (A) | Composition (B) | Compatibilité des compositions (A) + (B) |
|---|---|---|
| A6 | B7 (comp.) | 0 |
| A6 | B8 | 0 |
| A6 | B9 (comp.) | 2 |
| A6 | B10 | 0 |
| A6 | B1 (comp.) | 3 |
| A6 | B2 | 1 |
| A6 | B3 | 0 |
| A6 | B11 (comp.) | 4 |
| A6 | B12 | 2 |
| A6 | B14 (comp.) | 4 |
| A6 | B15 | 0 |
| A6 | B16 (comp.) | 4 |
| A6 | B17 (comp.) | 3 |

Les exemples montrent un effet compatibilisant, croissant avec la fraction de Tolonate^{™} X-FLO 100 présent dans la composition (B), pour les résines Amicure^{®}. Cet effet de compatibilisation est également attendu pour les systèmes à multiples composantes d'isocyanates dès qu'ils comprennent du Tolonate^{™} X FLO 100.

## Revendications

1. Composition de préparation d'un revêtement comprenant
(a) au moins un composé (a) dont la masse moléculaire va de 400 à 6 500 g.mol⁻¹ ou un composé (a) dont la fonctionnalité NH va de 2 à 30, choisi parmi
▪ un composé de formule (Q) 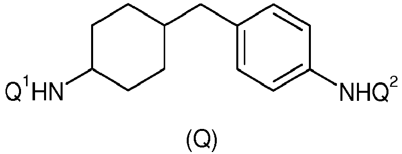 dans laquelle Q¹ et Q², identiques ou différents, représentent un groupement alkyle linéaire ou ramifié, comprenant de 1 à 20 atomes de carbone, en particulier de 2 à 12 atomes de carbone ou de 2 à 6 atomes de carbone ou au moins 3 atomes de carbone, notamment choisis parmi méthyle, éthyle, propyle, isopropyle, butyle, isobutyle, tertiobutyle, les différents isomères linéaires ou ramifiés des pentyle, hexyle, heptyle, octyle, nonyle et décyle ;
▪ un composé comprenant au moins deux fonctions amines secondaires et obtenu par réaction
(a1) d'au moins un composé comportant au moins une fonction amine primaire et
(a2) d'au moins un composé comportant une double liaison (C=C) située en α d'une fonction ester (C(O)OR) ou d'au moins un composé comportant une double liaison (C=C) située en α d'une fonction nitrile (CN) ou de leurs mélanges ;
ledit composé obtenu par réaction des étapes (a1) et (a2) étant
- un composé de formule (II-a) : 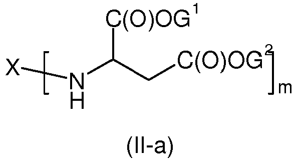
dans laquelle
m représente un nombre entier égal ou supérieur à 2, notamment un entier allant de 2 à 30, par exemple un entier allant de 2 à 10 ou de 2 à 6 ;
X représente un radical organique de valence m et obtenu par réaction d'un composé (a1) choisi parmi éthylènediamine, 1,2-diaminopropane, 1,4-diaminobutane, 2-méthyle-1,5-diaminopentane, 1,6-diaminohexane, 2,5-diamino-2,5-diméthylehexane, 2,2,4-triméthyle-1,6-diaminohexane, 2,4,4-trimethyl-1,6-diaminohexane, 1,11-diaminoundecane, 1,12-diaminododecane, 1-amino-3,3,5-triméthyle-5-aminométhylecyclohexane, 2,4-hexahydrotolylènediamine, 2,6-hexahydrotolylènediamine, 2,4'-diaminodicyclohexylemethane, 4,4'-diaminodicyclohexylemethane, 3,3'-diméthyle-4,4'-diamino-dicyclohexylemethane, 2,4,4'-triamino-5-méthyledicyclohexylemethane et les polyétherpolyamines substituées par au moins un groupe amino-aliphatique primaire dont la masse moléculaire moyenne va de 148 à 6 000 g/mol ;
G¹ et G², identiques ou différents, représentent indépendamment un radical organique, un radical hydrocarboné ou un radical hydrocarboné inertes vis-à-vis des fonctions isocyanates dans les conditions de préparation de la composition ; ou
- un composé de formule (II-b) : 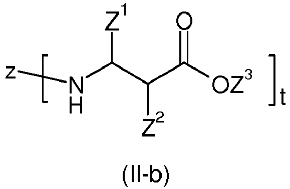
dans laquelle
t représente un nombre entier égal ou supérieur à 2, notamment un entier allant de 2 à 30, par exemple un entier allant de 2 à 10 ou de 2 à 6 ;
Z représente un radical de valence égale à m et choisi parmi un radical organique, un radical hydrocarboné, un radical hydrocarboné en C₂-C₅₀ ; résultant de l'élimination des fonctions amines primaires du composé (a1) ;
Z¹ représente indépendamment hydrogène ou un groupe C₁-C₄-alkyle, en particulier méthyle ;
Z² représente indépendamment hydrogène ou un groupe C₁-C₄-alkyle, en particulier méthyle ;
Z³ représente indépendamment un radical organique, un radical hydrocarboné ou un radical hydrocarboné inerte vis-à-vis des fonctions isocyanates dans les conditions de préparation de la composition ; ou
- un mélange d'au moins un composé de formule (II-a) et d'au moins un composé de formule (II-b)
▪ un mélange d'un composé de formule (Q) et d'un composé comprenant au moins deux fonctions amines secondaires et issu des étapes (a1) et (a2) ;
(b) une composante isocyanate de fonctionnalité NCO allant de de 1,6 à 3,5 ; préférentiellement allant de 1,7 à 3 ; et comprenant
(b1) au moins un allophanate de formule (I) et de fonctionnalité NCO égale à 2 +/- 0,1 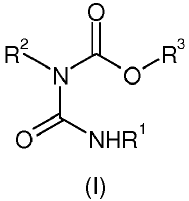 dans laquelle
- R¹ et R², identiques ou différents, représentent un groupe hydrocarboné, comprenant une fonction isocyanate dérivée ou non-dérivée ;
- R³ représente le reste résultant de la réaction de la fonction isocyanate avec l'hydrogène de la fonction OH d'un alcool comprenant une fonction éther ou polyéther et choisi parmi un silanol ; un monoalcool aliphatique à chaîne linéaire en C₁₂-C₂₀ ; un monoalcool aliphatique à chaîne ramifiée en C₁₂-C₂₀ ou un alcool de formule
T¹-[O-CH(T²)-CH₂]ₙ-OH
dans laquelle T¹ représente un groupe alkyle linéaire en C₁-C₂₀; un groupe alkyle ramifié en C₁-C₂₀; un groupement de formule T³-CO-CH₃ dans laquelle T³ représente un groupe alkyle linéaire en C₁-C₂₀ ou un groupe alkyle ramifié en C₁-C₂₀ ; T² représente H ; un groupe alkyle, de préférence un groupe alkyle en C₁-C₈, notamment méthyle ; un groupement éther, notamment un groupement de formule -CH₂OT⁴ dans laquelle T⁴ représente une chaîne hydrocarbonée, notamment une chaîne polyalkylène ou une chaîne polyoxyalkylène, de préférence une chaîne polyoxyéthylène ; n représente un nombre entier, de préférence un nombre entier allant de 1 à 50 ; et
(b2) au moins un isocyanate polyfonctionnel ; et
(b3) dans laquelle le rapport en masse entre la quantité d'allophanate (b1) et la quantité d'isocyanate polyfonctionnel (b2) va de 1/99 à 50/50,
la composition comprenant un mélange d'allophanates (b1) comprenant au moins 25% en masse, avantageusement au moins 33% en masse, de préférence au moins 50% en masse d'au moins un monoallophanate (b1),
la fonction isocyanate dérivée de l'allophanate (b1) étant différente d'une fonction isocyanurate et est choisie parmi les fonctions carbamate, urée, biuret, uréthanne, uretinedione, acylurée, isocyanate masquée, allophanate.

2. Composition selon la revendication 1 dont le ratio molaire [b/a] défini par [nombre de fonctions NCO de la composante (b)] / [nombre de fonctions NH du composé (a)] va de 0,7 à 1,3 ; 0,9 à 1,2 ; de 1 à 1,2 ; de 0,8 à 1,2 ; de 0,9 à 1,2 ; de 0,8 à 1,1 ; de 0,9 à 1,1 ; de 1 à 1,1 ou est égal à 1.

3. Composition selon les revendications 1 et 2
▪ pour laquelle le composé (a1) comprend au moins une fonction amine primaire et au moins un groupement choisi parmi une chaîne hydrocarbonée ; une chaîne hydrocarbonée comprenant au moins un hétéroatome choisi parmi O, S, N ; une chaîne hydrocarbonée et au moins une fonction choisie parmi une fonction ester, éther ou carbonate ; une chaîne hydrocarbonée comprenant au moins un hétéroatome choisi parmi O, S, N et au moins une fonction choisie parmi une fonction ester, éther ou carbonate ; la chaîne hydrocarbonée étant de préférence en C₁-C₂₀, linéaire, ramifiée ou cyclique ; ou
▪ pour laquelle le composé (a1) est un composé aminoester comportant au moins une fonction amine primaire ; ou
▪ pour laquelle le composé (a2) comprend une double liaison (C=C) susceptible de réagir par addition de Michael avec la fonction amine primaire du composé (a2) et qui est choisi parmi les dérivés esters comprenant une double liaison (C=C) tels que le maléate de diméthyle, le maléate de diéthyle, les maléates ou fumarates de dibutyle, le fumarate de diéthyle, le fumarate de diméthyle, le crotonate d'éthyle, le crotonate de butyle, le crotonate de 2-éthylhexyle, l'acrylate de méthyle, l'acrylate d'éthyle, l'acrylate de butyle, l'acrylate de 2-éthyle-hexyle, le méthacrylate d'éthyle, le méthacrylate de butyle, le méthacrylate de 2-éthylhexyle, les hydroxy alkyles acrylates, les hydroxy alkyles méthacrylates, l'itaconate de diéthyle, le méthyle-cyclohexene-1-carboxylate ; ou
▪ pour laquelle le composé (a2) est un composé choisi parmi un composé comportant des doubles liaisons (C=C) situées en α de fonctions esters (C(O)OR) tels qu'un polyacrylate d'alkyles, un triacrylate d'alkyles, un diacrylate d'alkyles, un polyméthacrylate d'alkyles, un triméthacrylate d'alkyles, un dimethacrylate d'alkyles, un polymaléate d'alkyles, un trimaléate d'alkyles, un dimaléate d'alkyles, comme le diacrylate d'hexane diol, le diméthacrylate d'hexane diol, le diacrylate de 2-éthyle hexanediol, le diméthacrylate de 2-éthyle hexanediol, le diacrylate de cyclohexane diol, le diméthacrylate de cyclohexane diol, le triacrylate de triméthylolpropane, le méthacrylate de triméthylolpropane, le triacrylate de triméthylolpropane comprenant des fonctions oligoéthylène glycols, le méthacrylate de triméthylolpropane comprenant des fonctions oligoétylène glycols, le tétraméthacrylate de pentaérythritol, le tétraacrylate de pentaérythritol, le méthacrylate de pentaérythritol, l'itaconate d'hexanediol, le diacrylate de polyéthylène glycol de masse moléculaire moyenne en nombre (Mₙ) comprise entre 200 et 2 000, le méthacrylate de polyéthylène glycol de masse moléculaire moyenne en nombre (Mₙ) comprise entre 200 et 2 000, les dérivés acrylates ou méthacrylates de polycaprolactone diol ou triol ou tetraol de masse moléculaire moyenne en nombre (Mₙ) comprise entre 200 et 2 000, les dérivés acrylates ou méthacrylates des polyols à fonctions carbonates ; ou
▪ combinant ces définitions des composés (a1) et (a2).

4. Composition selon la revendication 3 comprenant un composé (a) de formule (II) dans laquelle X représente un radical organique de valence m et obtenu par réaction d'un composé (a1) choisi parmi 1,4-diaminobutane, 2-méthyle-1,5-diaminopentane, 1,6-diaminohexane, 2,2,4-triméthyle-1,6-diaminohexane, 2,4,4-triméthyle-1,6-diaminohexane, 1-amino-3,3,5-triméthyle-5-aminométhylcyclohexane, 4,4'-diaminodicyclohexylemethane, 3,3'-dimethyl-4,4'-diaminodicyclohexylemethane.

5. Composition selon les revendications 1 à 4 pour laquelle le composé (b1) est un composé de formule (I) dans laquelle R¹ et R², identiques ou différents, représentent un groupe comprenant une fonction isocyanate dérivée ou non-dérivée et choisi parmi un groupe hydrocarboné aliphatique, cycloaliphatique, hétérocyclique ou aromatique, de préférence un groupe hydrocarboné aliphatique comprenant une fonction isocyanate dérivée ou non-dérivée.

6. Composition selon les revendications 1 à 5 pour laquelle l'allophanate (b1) est un homo-allophanate, R¹ et R² étant identiques, ou pour laquelle l'allophanate (b1) est un allophanate mixte, R¹ et R² étant différents.

7. Composition selon les revendications 1 à 6 comprenant un mélange d'allophanates comprenant au moins un allophanate choisi parmi un bis-allophanate, un tris-allophanate, un ou plusieurs allophanates lourds, ainsi que de manière minoritaire, du carbamate d'isocyanate de formule R²NCO et d'alcool de formule R³OH ou du carbamate d'isocyanate de formule R¹NCO et d'alcool de formule R³OH ou du mélange de carbamates d'isocyanates de formule R²NCO et de formule R¹NCO et d'alcool de formule R³OH.

8. Composition selon les revendications 1 à 7 pour laquelle le composé (b2) est un isocyanate polyfonctionnel tricondensat, de préférence un isocyanate polyfonctionnel tricondensat de formule (III) : 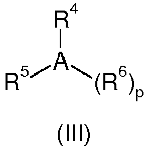 dans laquelle
- R⁴, R⁵ et R⁶ représentent indépendamment un groupement hydrocarboné ou un groupement hétérocarboné aliphatique, cycloaliphatique, hétérocyclique ou aromatique, comprenant au moins une fonction isocyanate dérivée ou non-dérivée ;
- p représente 0, 1 ou 2 ;
- A représente un groupement choisi parmi un groupe isocyanurate, un groupe imino oxadiazine dione, un groupe oxadiazine trione, un groupement biuret respectivement de formules (A¹) à (A⁴) ou un groupement de formule (A⁵) 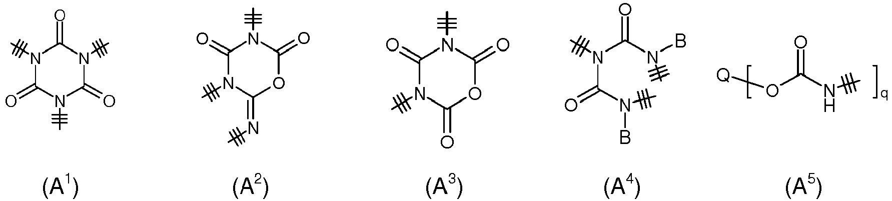 dans lesquelles
- B représente indépendamment un atome d'hydrogène ; un groupe hydrocarboné ; un groupe hydrocarboné en C₁-C₂₀; un groupe hétérocarboné comprenant au moins un hétéroatome choisi parmi O, N, S, Si ; un groupe hétérocarboné en C₁-C₂₀ comprenant au moins un hétéroatome choisi parmi O, N, S, Si ;
- q représente 3 ou 4 ;
- Q représente un groupement choisi parmi un groupe hydrocarboné, un groupement alcoyle, un groupement hétérocarboné, un groupement hétérocarboné aliphatique, cycloaliphatique, hétérocyclique ou aromatique, comprenant une fonction isocyanate dérivée ou non-dérivée, un groupement dérivé du pentaérythritol, un groupement dérivé du triméthylolpropane.

9. Composition selon les revendications 1 à 8
▪ pour laquelle l'isocyanate polyfonctionnel (b2) est un polyisocyanate isocyanurate ; ou
▪ pour laquelle l'isocyanate polyfonctionnel (b2) est
- un polyisocyanate isocyanurate issu d'une réaction de tricondensation pour laquelle le taux de transformation du ou des monomères isocyanates, identiques ou différents, en polyisocyanate polyfonctionnel tricondensat est supérieur à 8% ou supérieur à 10% ou supérieur à 15% ; ou
- un polyisocyanate isocyanurate comprenant entre 1 et 99% en poids de biuret ou entre 2 et 75% en poids de biuret ; ou
- un polyisocyanate isocyanurate issu d'une réaction de tricondensation pour laquelle le taux de transformation du ou des monomères isocyanates, identiques ou différents, en polyisocyanate polyfonctionnel tricondensat est supérieur à 8% ou supérieur à 10% ou supérieur à 15% et comprenant entre 1 et 99% en poids de biuret ou entre 2 et 75% en poids de biuret.

10. Utilisation d'une composition selon les revendications 1 à 9 pour la préparation d'un revêtement ou pour la préparation d'un revêtement réticulable ou pour la préparation d'un revêtement réticulable par irradiation UV.

## Patentansprüche

1. Zusammensetzung zur Herstellung einer Beschichtung, umfassend
(a) mindestens eine Verbindung (a), deren Molekulargewicht von 400 bis 6500 g.mol⁻¹ reicht, oder eine Verbindung (a), deren NH-Funktionalität von 2 bis 30 reicht, ausgewählt aus
▪ einer Verbindung von Formel (Q) 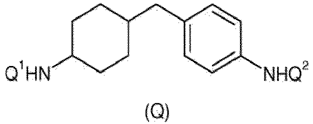 wobei Q¹ und Q², die gleich oder verschieden sind, eine geradkettige oder verzweigte Alkylgruppe umfassend 1 bis 20 Kohlenstoffatome, insbesondere 2 bis 12 Kohlenstoffatome oder 2 bis 6 Kohlenstoffatome oder mindestens 3 Kohlenstoffatome, darstellen, insbesondere ausgewählt aus Methyl, Ethyl, Propyl, Isopropyl, Butyl, Isobutyl, tert-Butyl, den verschiedenen geradkettigen oder verzweigten Isomeren von Pentyl, Hexyl, Heptyl, Octyl, Nonyl und Decyl;
▪ einer Verbindung, umfassend mindestens zwei sekundäre Aminfunktionen und erlangt durch Reaktion
(a1) mindestens einer Verbindung, umfassend mindestens eine primäre Aminfunktion und
(a2) mindestens einer Verbindung, umfassend eine Doppelbindung (C=C), die sich an α einer Esterfunktion (C(O)OR) befindet, oder mindestens einer Verbindung, umfassend eine Doppelbindung (C=C), die sich an α einer Nitrilfunktion (CN) befindet, oder Gemischen davon;
wobei die durch Reaktion der Schritte (a1) und (a2) erlangte Verbindung wie folgt ist
- eine Verbindung von Formel (II-a): 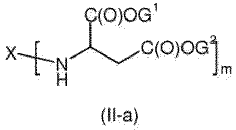
wobei
m eine ganze Zahl gleich wie oder größer als 2 ist, insbesondere eine ganze Zahl von 2 bis 30, beispielsweise eine ganze Zahl von 2 bis 10 oder von 2 bis 6;
X ein organisches Radikal mit Wertigkeit m darstellt und durch Reaktion einer Verbindung (a1), ausgewählt aus Ethylendiamin, 1,2-Diaminopropan, 1,4-Diaminobutan, 2-Methyl-1,5-diaminopentan, 1,6-Diaminohexan, 2,5-Diamino-2,5-dimethylhexan, 2,2,4-Trimethyl-1,6-diaminohexan, 2,4,4-Trimethyl-1,6-diaminohexan, 1,11-Diaminoundecan, 1,12-Diaminododecan, 1-Amino-3,3,5-trimethyl-5-aminomethylcyclohexan, 2,4-Hexahydrotolylendiamin, 2,6-Hexahydrotolylendiamin, 2,4'-Diaminodicyclohexylmethan, 4,4'-Diaminodicyclohexylmethan, 3,3'-Dimethyl-4,4'-diamino-dicyclohexylmethan, 2,4,4'-Triamino-5-methyldicyclohexylmethan und Polyetherpolyaminen, substituiert mit mindestens einer primären aliphatischen Aminogruppe, deren durchschnittliches Molekulargewicht von 148 bis 6000 g/mol reicht;
G¹ und G², die gleich oder verschieden sind, unabhängig ein organisches Radikal, ein Kohlenwasserstoffradikal oder ein Kohlenwasserstoffradikal darstellen, die unter den Herstellungsbedingungen der Zusammensetzung gegenüber den Isocyanatfunktionen inert sind; oder
- eine Verbindung von Formel (II-b): 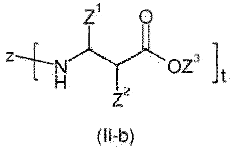
wobei
t eine ganze Zahl gleich wie oder größer als 2 ist, insbesondere eine ganze Zahl von 2 bis 30, beispielsweise eine ganze Zahl von 2 bis 10 oder von 2 bis 6;
Z ein Radikal mit Wertigkeit gleich m darstellt und ausgewählt ist aus einem organischen Radikal, einem Kohlenwasserstoffradikal, einem C₂-C₅₀-Kohlenwasserstoffradikal, das aus einer Entfernung der primären Aminfunktionen der Verbindung (a1) resultiert;
Z¹ unabhängig Wasserstoff oder eine C₁-C₄-Alkylgruppe, insbesondere Methyl, darstellt;
Z² unabhängig Wasserstoff oder eine C₁-C₄-Alkylgruppe, insbesondere Methyl, darstellt;
Z³ unabhängig ein organisches Radikal, ein Kohlenwasserstoffradikal oder ein Kohlenwasserstoffradikal darstellen, das unter den Herstellungsbedingungen der Zusammensetzung gegenüber den Isocyanatfunktionen inert ist; oder
- ein Gemisch aus mindestens einer Verbindung von Formel (II-a) und mindestens einer Verbindung von Formel (II-b)
▪ einem Gemisch aus einer Verbindung von Formel (Q) und einer Verbindung, umfassend mindestens zwei sekundäre Aminfunktionen und das aus den Schritten (a1) und (a2) stammt;
(b) eine Isocyanatkomponente mit einer NCO-Funktionalität, die von 1,6 bis 3,5, vorzugsweise 1,7 bis 3, reicht und umfassend
(b1) mindestens ein Allophanat von Formel (1) und eine NCO-Funktionalität gleich 2 +/-0,1 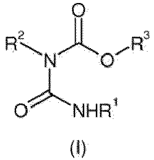 wobei
- R¹ und R², die gleich oder verschieden sind, eine Kohlenwasserstoffgruppe darstellen, umfassend eine derivatisierte oder nicht derivatisierte Isocyanatfunktion;
- R³ den Rest darstellt, der aus der Reaktion der Isocyanatfunktion mit dem Wasserstoff der OH-Funktion eines Alkohols resultiert, umfassend eine Ether- oder Polyetherfunktion und ausgewählt ist aus Silanol, einem geradkettigen aliphatischen C₁₂-C₂₀-Monoalkohol, einem verzweigtkettigen aliphatischen C₁₂-C₂₀-Monoalkohol oder einem Alkohol von Formel
T¹[O-CH(T²)-CH₂]ₙ-OH
wobei T¹ eine geradkettige C₁-C₂₀-Alkylgruppe, eine verzweigte C₁-C₂₀-Alkylgruppe, eine Gruppierung von Formel T³-CO-CH₃ darstellt, wobei T³ eine geradkettige C₁-C₂₀-Alkylgruppe oder eine verzweigte C₁-C₂₀-Alkylgruppe darstellt, T² H, eine Alkylgruppe, vorzugsweise eine C₁-C₈-Alkylgruppe, insbesondere Methyl; eine Ethergruppierung, insbesondere eine Gruppierung von Formel -CH₂OT⁴ darstellt, wobei T⁴ eine Kohlenwasserstoffkette, insbesondere eine Polyalkylenkette oder eine Polyoxyalkylenkette, vorzugsweise eine Polyoxyethylenkette, darstellt; n eine ganze Zahl, vorzugsweise eine ganze Zahl von 1 bis 50, darstellt; und
(b2) mindestens ein polyfunktionelles Isocyanat; und
(b3) wobei das Gewichtsverhältnis zwischen der Menge an Allophanat (b1) und der Menge an polyfunktionellem Isocyanat (b2) von 1/99 bis 50/50 reicht,
die Zusammensetzung umfassend ein Gemisch aus Allophanaten (b1), umfassend mindestens 25 Gewichts-%, vorteilhafterweise mindestens 33 Gewichts-%, vorzugsweise mindestens 50 Gewichts-% mindestens eines Monoallophanats (b1),
wobei die von dem Allophanat (b1) derivatisierte Isocyanatfunktion von einer Isocyanuratfunktion verschieden ist und ausgewählt ist aus Carbamat-, Harnstoff-, Biuret-, Urethan-, Uretdion-, Acylharnstoff-, maskierten Isocyanat- und Allophanatfunktionen.

2. Zusammensetzung nach Anspruch 1, wobei das Molverhältnis [b/a], definiert durch [Anzahl NCO-Funktionen der Komponente (b)] / [Anzahl NH-Funktionen der Verbindung (a)], von 0,7 bis 1,3; 0,9 bis 1,2; 1 bis 1,2; 0,8 bis 1,2; 0,9 bis 1,2; 0,8 bis 1,1; 0,9 bis 1,1; 1 bis 1,1 reicht oder gleich 1 ist.

3. Zusammensetzung nach den Ansprüchen 1 und 2,
▪ die Verbindung (a1) umfassend mindestens eine primäre Aminfunktion und mindestens eine Gruppierung, die ausgewählt ist aus einer Kohlenwasserstoffkette; einer Kohlenwasserstoffkette, umfassend mindestens ein Heteroatom, das ausgewählt ist aus O, S, N; einer Kohlenwasserstoffkette und mindestens eine Funktion, die ausgewählt ist aus einer Ester-, Ether- oder Carbonatfunktion; einer Kohlenwasserstoffkette, umfassend mindestens ein Heteroatom, ausgewählt aus O, S, Net und mindestens einer Funktion, ausgewählt aus einer Ester-, Ether- oder Carbonatfunktion, wobei die Kohlenwasserstoffkette vorzugsweise C₁-C₂₀, geradkettig, verzweigt oder cyclisch ist; oder
▪ wobei die Verbindung (a1) eine Aminoesterverbindung ist, umfassend mindestens eine primäre Aminfunktion ist; oder
▪ wobei die Verbindung (a2) eine Doppelbindung (C=C) umfasst, die geeignet sein kann, durch Michael-Addition mit der primären Aminfunktion der Verbindung (a2) zu reagieren, und die ausgewählt ist aus Esterderivaten, umfassend eine Doppelbindung (C=C), wie beispielsweise Dimethylmaleat, Diethylmaleat, Dibutylmaleate oder -fumarate, Diethylfumarat, Dimethylfumarat, Ethylcrotonat, Butylcrotonat, 2-Ethylhexylcrotonat, Methylacrylat, Ethylacrylat, Butylacrylat, 2-Ethylhexylacrylat, Ethylmethacrylat, Butylmethacrylat, 2-Ethylhexylmethacrylat, Hydroxyalkylacrylaten, Hydroxyalkylmethacrylaten, Diethylitaconat, Methylcyclohexen-1-carboxylat; oder
▪ wobei die Verbindung (a2) eine Verbindung ist, die ausgewählt ist aus einer Verbindung, umfassend Doppelbindungen (C=C), die sich an α von Esterfunktionen (C(O)OR) befinden, wie beispielsweise einem Alkylpolyacrylat, einem Alkyltriacrylat, einem Alkyldiacrylat, einem Alkylpolymethacrylat, einem Alkyltrimethacrylat, einem Alkyldimethacrylat, einem Alkylpolymaleat, ein Alkyltrimaleat, einem Alkyldimaleat, wie beispielsweise Hexandioldiacrylat, Hexandioldimethacrylat, 2-Ethylhexandioldiacrylat, 2-Ethylhexandioldiacrylat, Cyclohexandioldiacrylat, Cyclohexandioldimethacrylat, Trimethylolpropantriacrylat, Trimethylolpropanmethacrylat, Trimethylolpropantriacrylat, umfassend Oligoethylenglykolfunktionen, Trimethylolpropanmethacrylat, umfassend Oligoethylenglykolfunktionen, Pentaerythritoltetramethacrylat, Pentaerythrittetraacrylat, Pentaerythritmethacrylat, Hexandiolitaconat, Polyethylenglykoldiacrylat mit einem zahlenmittleren Molekulargewicht (Mₙ) zwischen 200 und 2000, Polyethylenglycolmethacrylat mit einem zahlenmittleren Molekulargewicht (Mₙ) von 200 bis 2000, Acrylat- oder Methacrylatderivaten von Polycaprolactondiol oder -triol oder -tetraol mit einem zahlenmittleren Molekulargewicht (Mₙ) von 200 bis 2000, Acrylat- oder Methacrylatderivaten von Polyolen mit Carbonatfunktionen; oder
▪ die diese Definitionen der Verbindungen (a1) und (a2) kombiniert.

4. Zusammensetzung nach Anspruch 3, umfassend eine Verbindung (a) von Formel (II), wobei X ein organisches Radikal mit Wertigkeit m darstellt, und erlangt ist durch Reaktion einer Verbindung (a1), ausgewählt aus 1,4-Diaminobutan, 2-Methyl-1,5-Diaminopentan, 1,6-Diaminohexan, 2,2,4-Trimethyl-1,6-diaminohexan, 2,4,4-Trimethyl-1,6-diaminohexan, 1-Amino-3,3,5-trimethyl-5-aminomethylcyclohexan, 4,4'-Diaminodicyclohexylethan, 3,3'-Dimethyl-4,4'-diaminodicyclohexylethan.

5. Zusammensetzung nach den Ansprüchen 1 bis 4, wobei die Verbindung (b1) eine Verbindung von Formel (1) ist, wobei R¹ und R², die gleich oder verschieden sind, eine Gruppe darstellen, umfassend eine derivatisierte oder nicht derivatisierte Isocyanatfunktion und die ausgewählt ist aus einer aliphatischen, cycloaliphatischen, heterocyclischen oder aromatischen Kohlenwasserstoffgruppe, vorzugsweise einer aliphatischen Kohlenwasserstoffgruppe, umfassend eine derivatisierte oder nicht derivatisierte Isocyanatfunktion.

6. Zusammensetzung nach den Ansprüchen 1 bis 5, wobei das Allophanat (b1) ein Homoallophanat ist, wobei R¹ und R² gleich sind, oder wobei das Allophanat (b1) ein gemischtes Allophanat ist, wobei R¹ und R² verschieden sind.

7. Zusammensetzung nach Anspruch 1 bis 6, umfassend ein Gemisch aus Allophanaten, umfassend mindestens ein Allophanat, ausgewählt aus Bisallophanat, Trisallophanat, einem oder mehreren schweren Allophanaten, sowie als Minderheit, Isocyanatcarbamat von Formel R²NCO und Alkohol von Formel R³OH oder Isocyanatcarbamat von Formel R¹NCO und Alkohol von Formel R³OH oder dem Gemisch aus Isocyanatcarbamaten von Formel R²NCO und von Formel R¹NCO und Alkohol von Formel R³OH.

8. Zusammensetzung nach den Ansprüchen 1 bis 7, wobei die Verbindung (b2) ein polyfunktionelles Tricondensat-Isocyanat ist, vorzugsweise ein polyfunktionelles Tricondensat-Isocyanat von Formel (III): 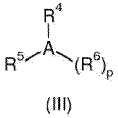 wobei
- R⁴, R⁵ und R⁶ unabhängig eine Kohlenwasserstoffgruppierung oder eine aliphatische, cycloaliphatische, heterocyclische oder aromatische Heterokohlenstoffgruppierung darstellen, umfassend mindestens eine derivatisierte oder nicht derivatisierte Isocyanatfunktion;
- p für 0, 1 oder 2 darstellt;
- A eine Gruppierung darstellt, ausgewählt aus einer Isocyanuratgruppe, einer Imino-Oxadiazindiangruppe, einer Oxadiazintriongruppe, einer Biuretgruppierung jeweils von Formel (A¹) bis (A⁴) oder einer Gruppierung von Formel (A⁵) 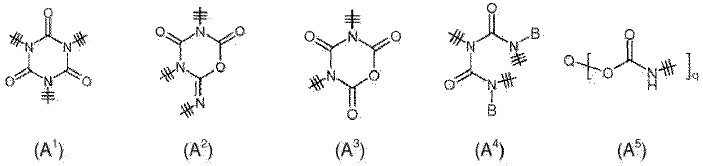 wobei
- B unabhängig ein Wasserstoffatom; eine Kohlenwasserstoffgruppe; eine C₁-C₂₀-Kohlenwasserstoffgruppe; eine Heterokohlenstoffgruppe, umfassend mindestens ein Heteroatom, ausgewählt aus O, N, S, Si; eine C₁-C₂₀-Heterokohlenstoffgruppe, umfassend mindestens ein Heteroatom, ausgewählt aus O, N, S, Si, darstellt;
- q 3 oder 4 darstellt;
- Q eine Gruppierung darstellt, ausgewählt aus einer Kohlenwasserstoffgruppe, einer Alkylgruppe, einer Heterokohlenstoffgruppierung, einer aliphatischen, cycloaliphatischen, heterocyclischen oder aromatischen Heterokohlenstoffgruppierung, umfassend eine derivatisierte oder nicht derivatisierte Isocyanatfunktion, einer von Pentaerythritol derivatisierten Gruppierung, einer von Trimethylolpropan derivatisierten Gruppierung.

9. Zusammensetzung nach den Ansprüchen 1 bis 8
▪ wobei das polyfunktionelle Isocyanat (b2) ein Isocyanurat-Polyisocyanat ist; oder
▪ wobei das polyfunktionelle Isocyanat (b2) wie folgt ist
- ein Isocyanuratpolyisocyanat aus einer Trikondensationsreaktion, bei der die Umwandlungsrate des oder der gleichen oder verschiedenen Isocyanatmonomers/en in das polyfunktionelle Trikondensatpolyisocyanat größer als 8 % oder größer als 10 % oder größer als 15 % ist; oder
- ein Isocyanuratpolyisocyanat, umfassend zwischen 1 und 99 Gewichts-% Biuret oder zwischen 2 und 75 Gewichts-% Biuret; oder
- ein Isocyanuratpolyisocyanat aus einer Trikondensationsreaktion, bei der die Umwandlungsrate des oder der gleichen oder verschiedenen Isocyanatmonomers/en in das polyfunktionelle Trikondensatpolyisocyanat größer als 8 % oder größer als 10 % oder größer als 15 % ist, und umfassend zwischen 1 und 99 Gewichts-% Biuret oder zwischen 2 und 75 Gewichts-% Biuret.

10. Verwendung einer Zusammensetzung nach den Ansprüchen 1 bis 9 zur Herstellung einer Beschichtung oder zur Herstellung einer vernetzbaren Beschichtung oder zur Herstellung einer vernetzbaren Beschichtung durch UV-Bestrahlung.

## Claims

1. A composition for preparing a coating comprising
(a) at least one compound (a) for which the molecular mass ranges from 400 to 6,500 g.mol⁻¹ or a compound (a) for which the NH functionality ranges from 2 to 30, selected from
▪ a compound of formula (Q) 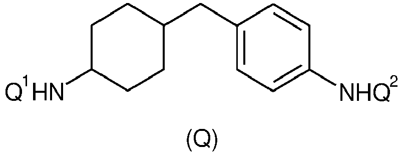 wherein Q¹ and Q², either identical or different, represent a linear or, branched alkyl group, comprising from 1 to 20 carbon atoms, in particular 2 to 12 carbon atoms or 2 to 6 carbon atoms or at least 3 carbon atoms, notably selected from methyl, ethyl, propyl, isopropyl, butyl, isobutyl, tertiobutyl, various linear or branched isomers of pentyl, hexyl, heptyl, octyl, nonyl and decyl groups;
▪ a compound comprising at least two secondary amine functions and obtained by reaction
(a1) of at least one compound including at least one primary amine function and
(a2) of at least one compound including a double bond (C=C) located in the α position of an ester function (C(O)OR) or of at least one compound including a double bond (C=C) located in the α position of a nitrile function (CN) or mixtures thereof;
said compound obtained by reaction of steps (a1) and (a2) being
- the compound (a) is a compound of formula (II-a): 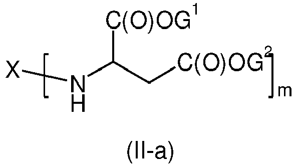
wherein
m represents an integer equal or greater than 2, notably an integer ranging from 2 to 30, for example an integer ranging from 2 to 10 or from 2 to 6;
X represents an organic radical with a valence equal to m and obtained by reaction of a compound (a1) selected from ethylenediamine, 1,2-diaminopropane, 1,4-diaminobutane, 2-methyl-1,5-diaminopentane, 1,6-diaminohexane, 2,5-diamino-2,5-dimethylhexane, 2,2,4-trimethyl-1,6-diaminohexane, 2,4,4-trimethyl-1,6-diaminohexane, 1,11-diaminoundecane, 1,12-diaminododecane, 1-amino-3,3,5-trimethyl-5-aminomethylcyclohexane, 2,4-hexahydrotolylenediamine, 2,6-hexahydrotolylenediamine, 2,4'-diaminodicyclohexylmethane, 4,4'-diamino-dicyclohexylmethane, 3,3'-dimethyl-4,4'-diamino-dicyclohexylmethane, 2,4,4'-triamino-5-methyldicyclohexylmethane and polyetherpolyamines substituted with at least one primary amino-aliphatic group, for which the average molecular mass ranges from 148 to 6,000 g/mol;
G¹ and G², either identical or different, independently represent an organic radical, a hydrocarbon radical or a hydrocarbon radical inert towards isocyanate functions under the preparation conditions of the composition; or
- a compound of formula (II-b): 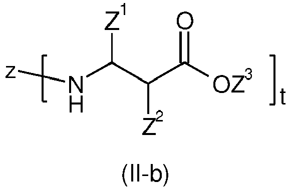
wherein
t represents an integer equal to or greater than 2, notably an integer ranging from 2 to 30, for example an integer ranging from 2 to 10 or from 2 to 6;
Z represents a radical with a valence equal to m and selected from an organic radical, a hydrocarbon radical, a C₂-C₅₀ hydrocarbon radical; resulting from the removal of the primary amines functions of the compound (a1);
Z¹ independently represents hydrogen or a C₁-C₄-alkyl group, in particular methyl;
Z² independently represents hydrogen or a C₁-C₄-alkyl group, in particular methyl;
Z³ independently represents an organic radical, a hydrocarbon radical or a hydrocarbon radical inert towards isocyanate functions under the preparation conditions of the composition; or
- a mixture of at least one compound of formula (II-a) and of at least one compound of formula (II-b);
▪ a mixture of a compound of formula (Q) and of a compound comprising at least two secondary amine functions and stemming from steps (a1) and (a2);
(b) an isocyanate component with NCO functionality ranging from 1.6 to 3.5; preferentially ranging from 1.7 to 3; and comprising
(b1) at least one allophanate of formula (I) and with NCO functionality equal to 2 +/- 0.1 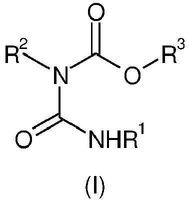 wherein
- R¹ and R², either identical or different, represent a hydrocarbon group, comprising a derivatized or non-derivatized isocyanate function;
- R³ represents the radical resulting from the reaction of the isocyanate function with the hydrogen of the OH function of an alcohol comprising an ether or polyether function and selected from a silanol; an aliphatic monoalcohol with a linear C₁₂-C₂₀ chain; an aliphatic monoalcohol with a branched C₁₂-C₂₀ chain; or an alcohol of formula
T¹-[O-CH(T²)-CH₂]ₙ-OH
wherein T¹ represents a linear C₁-C₂₀ alkyl group; a branched C₁-C₂₀ alkyl group; a group of formula T³-CO-CH₃ wherein T³ represents a linear C₁-C₂₀ alkyl group or a branched C₁-C₂₀ alkyl group; T² represents H; an alkyl group, preferably a C₁-C₈ alkyl group, notably methyl; an ether group, notably a group of formula -CH₂OT⁴ wherein T⁴ represents a hydrocarbon chain, notably a polyalkylene chain or a polyoxyalkylene chain, preferably a polyoxyethylene chain; n represents an integer, preferably an integer ranging from 1 to 50; and
(b2) at least one polyfunctional isocyanate; and
(b3) wherein the mass ratio between the amount of allophanate (b1) and
the amount of polyfunctional isocyanate (b2) ranges from 1/99 to 50/50;
the composition comprising a mixture of allophanates (b1) comprising at least 25% by mass, advantageously at least 33% by mass, preferably at least 50% by mass of at least one monoallophanate (b1);
the derivatized isocyanate function of the allophanate (b1) is different from an isocyanurate function and is selected from carbamate, urea, biuret, urethane, uretinedione, acylurea, masked isocyanate, allophanate functions.

2. The composition according to claim 1, for which the molar ratio [b/a] defined by [number of NCO functions of component (b)] / [number of NH functions of compound (a)] ranges from 0.7 to 1.3; 0.9 to 1.2; from 1 to 1.2; from 0.8 to 1.2; from 0.9 to 1.2; from 0.8 to 1.1; from 0.9 to 1.1; from 1 to 1.1 or is equal to 1.

3. The composition according to claims 1 and 2
▪ for which the compound (a1) comprises at least one primary amine function and at least one group selected from a hydrocarbon chain; a hydrocarbon chain comprising at least one heteroatom selected from O, S, N; a hydrocarbon chain and at least one function selected from an ester, ether or carbonate function; a hydrocarbon chain comprising at least one heteroatom selected from O, S, N and at least one function selected from an ester, ether or carbonate function; the hydrocarbon chain being preferably a linear, branched or cyclic C₁-C₂₀ chain; or
▪ for which the compound (a1) is an aminoester compound including at least one primary amine function; or
▪ for which the compound (a2) comprises a double bond (C=C) capable of reacting by Michael addition with the primary amine function of the compound (a2) and which is selected from ester derivatives comprising a double bond (C=C) such as dimethyl maleate, diethyl maleate, dibutyl maleates or fumarates, diethyl fumarate, dimethyl fumarate, ethyl crotonate, butyl crotonate, 2-ethylhexyl crotonate, methyl acrylate, ethyl acrylate, butyl acrylate, 2-ethyl-hexyl acrylate, ethyl methacrylate, butyl methacrylate, 2-ethylhexyl methacrylate, hydroxyalkyl acrylates, hydroxyalkyl methacrylates, diethyl itaconate, methyl-cyclohexene-1-carboxylate; or
▪ for which the compound (a2) is a compound selected from a compound including doubles bonds (C=C) located in the α position of ester functions (C(O)OR) such as alkyl polyacrylate, alkyl triacrylate, alkyl diacrylate, alkyl polymethacrylate, alkyl trimethacrylate, alkyl dimethacrylate, alkyl polymaleate, alkyl trimaleate, alkyl dimaleate, like hexanediol diacrylate, hexanediol dimethacrylate, 2-ethyl hexanediol diacrylate, 2-ethyl hexanediol dimethacrylate, cyclohexanediol diacrylate, cyclohexanediol dimethacrylate, trimethylolpropane triacrylate, trimethylolpropane methacrylate, trimethylolpropane triacrylate comprising oligoethylene glycol functions, trimethylolpropane methacrylate comprising oligoethylene glycol functions, pentaerythritol tetramethacrylate, pentaerythritol tetraacrylate, pentaerythritol methacrylate, hexanediol itaconate, polyethylene glycol diacrylate of an number average molecular mass (Mₙ) comprised between 200 and 2,000, polyethylene glycol methacrylate with a number average molecular mass (Mₙ) comprised between 200 and 2,000, acrylate or methacrylate derivatives of polycaprolactone diol or triol or tetraol with a number average molecular mass (Mₙ) comprised between 200 and 2,000, acrylate or methacrylate derivatives of polyols with carbonate functions; or
▪ combining these definitions of the compounds (a1) and (a2).

4. The composition according to claim 3 comprising a compound (a) of formula (II) wherein X represents an organic radical of valence m and is obtained by the reaction of a compound (a1) selected from 1,4-diaminobutane, 2-methyl-1,5-diaminopentane, 1,6-diaminohexane, 2,2,4-trimethyl-1,6-diaminohexane, 2,4,4-trimethyl-1,6-diaminohexane, 1-amino-3,3,5-trimethyl-5-aminomethylcyclohexane, 4,4'-diaminodicyclohexylmethane, 3,3'-dimethyl-4,4'-diaminodicyclohexylmethane.

5. The composition according to claims 1 to 4 for which the compound (b1) is a compound of formula (I), wherein R¹ and R², either identical or different, represent a group comprising a derivatized or non-derivatized isocyanate function and selected from an aliphatic, cycloaliphatic, heterocyclic or aromatic hydrocarbon group, preferably an aliphatic hydrocarbon group comprising a derivatized or non-derivatized isocyanate function.

6. The composition according to claims 1 to 5, for which the allophanate (b1) is a homo-allophanate, R¹ and R² being identical, or for which the allophanate (b1) is a mixed allophanate, R¹ and R² being different.

7. The composition according to claims 1 to 6, comprising a mixture of allophanates comprising at least one allophanate selected from a bis-allophanate, a tris-allophanate, one or several heavy allophanates, as well as in a minority way, carbamate of an isocyanate of formula R²NCO and of an alcohol of formula R³OH or carbamate of an isocyanate of formula R¹NCO and of an alcohol of formula R³OH or a mixture of carbamates of isocyanates of formula R²NCO and of formula R¹NCO and of an alcohol of formula R³OH.

8. The composition according to claims 1 to 7, for which the compound (b2) is a polyfunctional isocyanate tricondensate, preferably a polyfunctional isocyanate tricondensate of formula (III): 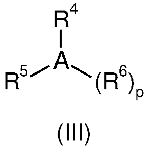 wherein
- R⁴, R⁵ and R⁶ independently represent an aliphatic, cycloaliphatic, heterocyclic or aromatic hydrocarbon group or heterocarbon group, comprising at least one derivatized or non-derivatized isocyanate function;
- p represents 0, 1 or 2;
- A represents a group selected from an isocyanurate group, an imino oxadiazine dione group, an oxadiazine trione group, a biuret group of formulae (A¹) to (A⁴) or a group of formula (A⁵), respectively 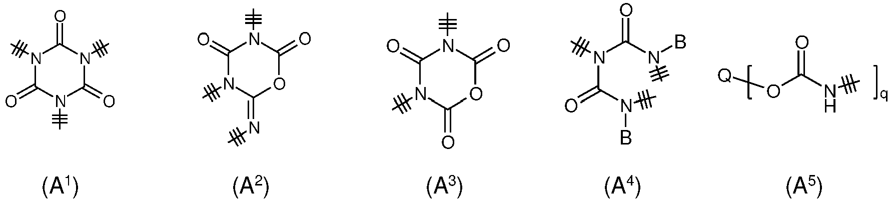 wherein
- B independently represents a hydrogen atom; a hydrocarbon group; a C₁-C₂₀ hydrocarbon group; a heterocarbon group comprising at least one heteroatom selected from O, N, S, Si; a C₁-C₂₀ heterocarbon group comprising at least one heteroatom selected from O, N, S, Si;
- q represents 3 or 4;
- Q represents a group selected from a hydrocarbon group, an alkyl group, a heterocarbon group, an aliphatic, cycloaliphatic, heterocyclic or aromatic heterocarbon group, comprising a derivatized or non-derivatized isocyanate function, a group derived from pentaerythritol, a group derived from trimethylolpropane.

9. The composition according to claims 1 to 8,
- for which the polyfunctional isocyanate (b2) is a polyisocyanate isocyanurate; or
- for which the polyfunctional isocyanate (b2) is
- a polyisocyanate isocyanurate stemming from a tricondensation reaction for which the transformation rate of the isocyanate monomer(s), either identical or different, into a polyfunctional polyisocyanate tricondensate is greater than 8% or greater than 10% or greater than 15%; or
- a polyisocyanate isocyanurate comprising between 1 and 99% by weight of biuret or between 2 and 75% by weight of biuret; or
- a polyisocyanate isocyanurate stemming from a tricondensation reaction for which the transformation rate of the isocyanate monomer(s), either identical or different, into a polyfunctional polyisocyanate tricondensate is greater than 8% or greater than 10% or greater than 15% and comprising between 1 and 99% by weight of biuret or between 2 and 75% by weight of biuret.

10. The use of a composition according to claims 1 to 9 for preparing a coating or for preparing a cross-linkable coating or for preparing a coating which is cross-linkable by UV irradiation or for preparing a coating for which hydrophobicity is improved.
